(19) Europäisches Patentamt
European Patent Office
Office européen des brevets

(11) **EP 4 070 933 A1**

(12) **EUROPEAN PATENT APPLICATION**

(43) Date of publication:
**12.10.2022 Bulletin 2022/41**

(21) Application number: **22164987.4**

(22) Date of filing: **29.03.2022**

(51) International Patent Classification (IPC):
**B29C 48/86** (2019.01)      **B29C 44/20** (2006.01)
**B29C 48/32** (2019.01)

(52) Cooperative Patent Classification (CPC):
**B29C 48/32; B29C 44/20; B29C 48/865;
B29C 48/872**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2021   JP 2021064110
30.09.2021   JP 2021162157**

(71) Applicant: **Ricoh Company, Ltd.
Tokyo 143-8555 (JP)**

(72) Inventors:
• **MIKI, Tomoharu
Tokyo, 143-8555 (JP)**
• **TANAKA, Takashi
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **EXTRUSION MOLDING DIE, PLASTIC MANUFACTURING APPARATUS, AND PLASTIC MANUFACTURING METHOD**

(57)    An extrusion molding die (1) includes an extrusion outlet (9), a plastic flow channel (7), and a temperature adjusting channel. The extrusion outlet (9) is configured to extrude a plastic composition including at least one kind of plastic. The plastic flow channel (7) is configured to allow the supplied plastic composition to flow toward the extrusion outlet (9). The temperature adjusting channel is configured to allow a temperature adjusting medium to flow. The temperature adjusting channel includes three or more temperature adjusting channels (4a to 4d) arranged around the plastic flow channel (7). Each of the temperature adjusting channels (4a to 4d) is arranged at a position in ±10% of (360°/N) in a rotation direction about an extrusion center axis relative to an adjacent temperature adjusting channel, where a number of the temperature adjusting channels (4a to 4d) is N.

FIG.1

**Description**

BACKGROUND OF THE INVENTION

1. Field of the Invention

The present invention relates to an extrusion molding die, a plastic manufacturing apparatus, and a plastic manufacturing method.

2. Description of the Related Art

Conventionally, an extrusion molding die having an extrusion outlet from which a plastic composition including at least one kind of plastic is extruded, a plastic flow channel to let a supplied plastic composition flow to the extrusion outlet, and a temperature adjusting channel through which a temperature adjusting medium is made flow has been known.

In Japanese Unexamined Patent Application Publication No. 08-34047, an extrusion molding die as described above that has plural temperature adjusting channels that extend in an extrusion direction of a plastic composition are arranged around a plastic flow channel is described.

However, temperature uniformity of the extrusion molding die has been susceptible to improvement.

SUMMARY OF THE INVENTION

According to an aspect of the present invention, an extrusion molding die includes an extrusion outlet, a plastic flow channel, and a temperature adjusting channel. The extrusion outlet is configured to extrude a plastic composition including at least one kind of plastic. The plastic flow channel is configured to allow the supplied plastic composition to flow toward the extrusion outlet. The temperature adjusting channel is configured to allow a temperature adjusting medium to flow. The temperature adjusting channel includes three or more temperature adjusting channels arranged around the plastic flow channel. Each of the temperature adjusting channels is arranged at a position in $\pm 10\%$ of $(360°/N)$ in a rotation direction about an extrusion center axis relative to an adjacent temperature adjusting channel, where a number of the temperature adjusting channels is N.

According to an aspect of the present invention, it is possible to control temperature of an extrusion molding die to temperature substantially uniform in a circumferential direction.

BRIEF DESCRIPTION OF THE DRAWINGS

FIG. 1 is a schematic configuration diagram of a foam plastic manufacturing apparatus according to the present embodiment;
FIG. 2 is a schematic configuration diagram of a kneading device 10 that fabricates a master batch;
FIG. 3 is an enlarged cross-section of a principal part of a die;
FIG. 4 is a cross-section along A-A' in FIG. 3;
FIGS. 5A to 5F illustrate six sides of the die;
FIGS. 6A and 6B are schematic configuration diagrams of a die of a modification;
FIG. 7 is a schematic cross-section of a die of a first embodiment;
FIG. 8 is a schematic cross-section of a die of a second embodiment;
FIG. 9 is a schematic cross-section of a die of a third embodiment;
FIG. 10 is a schematic cross-section of a die of a fourth embodiment;
FIGS. 11A and 11B are schematic configuration diagrams of a die of a fifth embodiment;
FIG. 12 is a schematic cross-section of a die of a sixth embodiment;
FIG. 13 is a schematic cross-section of a die of a seventh embodiment;
FIG. 14 is a schematic cross-section of a die of a eighth embodiment;
FIG. 15 is a schematic cross-section of a die of a ninth embodiment;
FIG. 16 is a schematic cross-section of a die of a tenth embodiment;
FIG. 17 is a schematic cross-section of a die of a first comparative example;
FIGS. 18A and 18B are schematic configuration diagrams of a die of a second comparative example;
FIG. 19 is a schematic cross-section of a die of a third comparative example;
FIG. 20 is a graph showing a relation between a maximum thickness/an arithmetic mean value of thickness and a temperature difference in a circumferential direction at a position upstream from an extrusion outlet of a die in an extrusion direction by 3 mm in a direction of an extrusion center axis; and
FIG. 21 is a graph showing a relation between a minimum thickness/an arithmetic mean value of thickness and a temperature difference in the circumferential direction at the position upstream from the extrusion outlet of the die in an extrusion direction by 3 mm in the direction of the extrusion center axis.

The accompanying drawings are intended to depict exemplary embodiments of the present invention and should not be interpreted to limit the scope thereof. Identical or similar reference numerals designate identical or similar components throughout the various drawings.

DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

First, a manufacturing method of a plastic foam sheet, which is a foam plastic, will be explained.

Manufacturing Method of Plastic Foam Sheet

A manufacturing method of plastic foam sheet of the present invention includes a kneading process, a foaming process, and the like, and other processes are further added as necessary.

The kneading process and the foaming process may be performed simultaneously, or performed as separate processes.

Kneading Process

The kneading process is a process of kneading plastic and a filler as necessary. In the kneading process, a foaming agent may be added to efficiently proceed foam formation. According to a use of a molded item, a cross-linking agent, an antioxidant, a colorant, an absorbent of various kinds of light beams, an antistatic agent, or an electrical conducting material may be kneaded. To proceed foam formation more efficiently, or to proceed kneading more efficiently, the kneading process may be performed in the presence of compressible fluid.

A mixture generated in an intermediate process in the course of obtaining plastic, filler, and a final molding item can be called plastic composition or master batch.

Plastic

As the plastic described above, styrene homopolymer such as polystyrene and poly-p-methylstyrene, styrene copolymer such as styrene-maleic anhydride copolymer, styrene-acrylonitrile copolymer, styrene-acrylonitrile-butadiene copolymer, styrene-acrylic acid copolymer, and styrene-methacrylic acid copolymer, styrene resin such as compound of polystyrene and polyphenylene oxide, aliphatic polyester resin such as polylactic acid, polyglycolic acid, poly (3-hydroxybutyrate), poly (3-hydroxybutyrate, 3-hydroxyhexanoate), poly (3-hydroxybutyrate, 3-hydroxyvalerate), polycaprolactone, polybutylene succinate, poly (butylene succinate, adipate), and the like can be used.

Among these, biodegradable resin that is biodegraded by microorganisms, and aliphatic polyester resin that is an environmentally benign polymer material are preferable, and particularly, polylactic acid that is a carbon neutral material and is relatively low cost is more preferable. By containing 90 percent by mass of polylactic acid, a foam plastic having biodegradability can be obtained.

Filler

The filler (hereinafter, also referred to as "foaming nucleus") described above is included for the purpose of adjusting a foaming condition (size, amount, and arrangement of foams) and the like, the purpose of reducing costs, and the purpose of improving the strength.

Examples of the filler include an inorganic filler, an organic filler, and the like. These fillers may be used with one kind singly, or may be used with two or more kinds combined.

Examples of the inorganic filler include talc, kaolin, calcium carbonate, layered silicate, zinc carbonate, wallastonite, silica, alumina, magnesium oxide, calcium silicate, sodium aluminate, calcium aluminate, sodium alminosilicate, magnesium silicate, glass bubbles, carbon black, zinc oxide, antimony trioxide, zeolite, hydrotalcite, metal fiber, metal whisker, ceramic whisker, potassium titanate, boron nitride, graphite, glass fiber, carbon fiber, and the like.

Examples of the organic filler include naturally occurring polymers of starch, cellulose particle, wooden power, soy pulp, rice husk, and bran, and the like, or modifications of these, sorbitol compound, benzoic acid and metal salt of its compound, phosphate metal salt, rosin compound, and the like.

Among these, silica, which is an inorganic nucleus, is preferable because of its affinity for compressible fluid described later. Moreover, when a filler other than silica is used as a base, it is preferable to use a filler subjected to surface treatment with silica.

Foaming Agent

In terms of easiness of obtaining a plastic foam sheet of a high foaming rate, examples of the above foaming agent include a physical foaming agent and the like of a carbon hydride group of light alkane or the like, such as propane, normal butane, isobutane, normal pentane, isopentane, and hexane, an ether group such as dimethyl ether, a halogenated hydrocarbon group such as methyl chloride and ethyl chloride, a compressible gas such as carbon dioxide and nitrogen, and the like.

Among these, it is preferable to use a compressible gas, such as carbon dioxide and nitrogen, from the viewpoint that it is odor-free, it can be safely handed, and it is environmentally benign.

Compressible Fluid

Examples of a substance that can be used as the compressible fluid described above include carbon monoxide, carbon dioxide, dinitrogen monoxide. nitrogen, methane, ethane, propane, 2,3-Dimethylbutane, ethylene, dimethyl ether, and the like. Among these, carbon dioxide is preferable in points that the critical pressure is approximately 7.4 MPa and the critical temperature is approximately 31°C, and it is easy to create a supercritical state, and that it is non-combustible and is easy to be handled, and the like. These compressible fluids may be used with one kind singly, or may be used with two or more kinds combined.

Because the solubility of a compressive fluid changes depending on a combination of plastic and compressible fluid, temperature, and pressure, it is necessary to adjust a supply amount of the compressible fluid appropriately.

For example, in a case of combination of polylactic acid and carbon dioxide, 2% by mass to 30% by mass is preferable. When the supply amount of carbon dioxide is 2% by mass or more, it is possible to prevent an undesirable state that the plasticizing effect is limited. When the supply amount of carbon dioxide is equal to or less than 30% by mass, it is possible to prevent an undesirable state that a foam sheet having a uniform thickness cannot be obtained as a result of occurrence of the phase separation between carbon dioxide and polylactic acid.

Kneading Device

A kneading device used in the kneading process can adopt a continuous process in which the kneading process and the foaming process are performed continuously, or can adopt a batch-wise process, but it is preferable that a reaction process be selected appropriately, considering the device efficiency, the property and quality of a product, and the like.

As the kneading device, in terms of adjustability to viscosity suitable for kneading, a single-screw extruder, a multi-screw extruder, a kneader, an anaxial basket stirring tank, BIVOLAK of Sumitomo Heavy Industries, Ltd., N-SCR of Mitsubishi Heavy Industries, Ltd., a spectacle blade, lattice blade, Kenix type, or Sulzer type SMLX static mixer equipped tubular polymerizer of Hitachi, Ltd., or the like can be used. In terms of color tone, a finisher, which is a self-cleaning polymerizer, an N-SCR, a double-screw extruder, and the like are considered. Among these, the finisher and the N-SCR are preferable in terms of color tone, stability, and thermal resistance of resin. In terms of production efficiency, the single-screw extruder and the multi-screw extruder are preferable.

Foaming Process

The foaming process is a process in which a plastic composition is foamed by expanding the foaming agent. In the case of compressible fluid, expansion and the foaming agent can be removed by releasing the pressure. As for temperature in the foaming process, it is preferable to heat to a temperature at which plastic is plasticized in an extrudable range.

For a driving force to make the plastic composition flow in the foaming process, pressure from the kneading device described above may be used, or machine equipment, such as a single-screw or a multi-screw extruder and a cylinder, may be used separately for the foaming process.

Other Processes

As other processes, any process can be selected appropriately according to a purpose, not particularly limited as long as it is a process performed in manufacturing of an ordinary plastic foam sheet and, for example, a forming process of processing into a sheet is included.

Examples of the forming process include the vacuum forming, pressure forming, press forming, and the like. In the present embodiment, a cylindrical master batch is formed, and this master batch is formed into a sheet shape in the forming process, to obtain a plastic foam sheet.

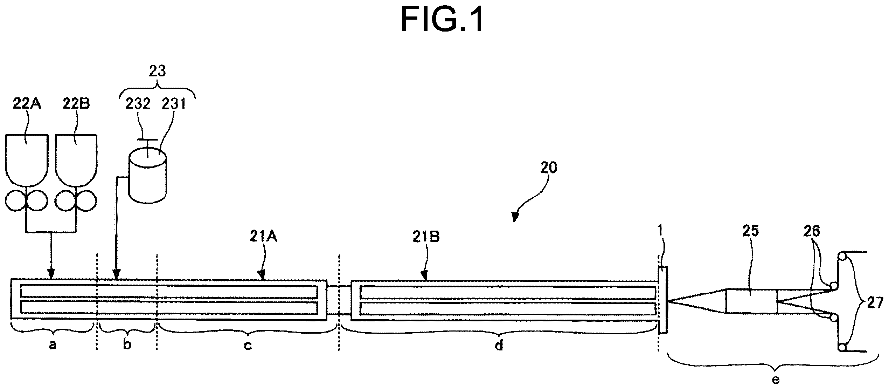

FIG. 1 is a schematic configuration diagram of a plastic manufacturing apparatus that manufactures a foam plastic according to the present embodiment.

A plastic manufacturing apparatus 20 includes a first extruder 21A as a kneading device that performs the kneading process, and a second extruder 21B that performs the foaming process connected in series.

To a distal end (downstream end in an extrusion direction) of the second extruder 21B, a die 1 that is an extrusion molding die is attached, and a plastic composition is extruded while foaming from this die 1, and thereby a foam plastic is formed.

The first extruder 21A has a material mixing/melting area (a), a compressible-fluid supply area (b), and a kneading area (c), and the second extruder 21B has an extruding area (d).

The first extruder 21A and the second extruder 21B are double-screw extruder (manufactured by JSW, Ltd., screw diameter 42 mm, L/D=48).

Material Mixing/Melting Area

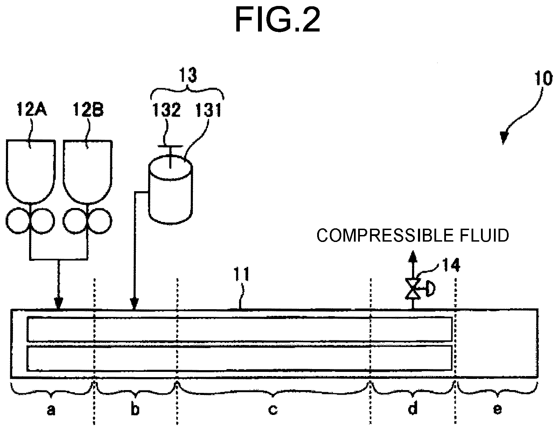

In the material mixing/melting area a, a filler is supplied by a first quantitative feeder 22A, and a resin material, such as polylactic acid, is supplied by a second quantitative feeder 22B. In place of a filler, the master batch manufactured by a kneading device 10 (refer to FIG. 2) may be supplied by the first quantitative feeder 22A.

Compressible-Fluid Supply Area

To the compressible-fluid supply area b, a gas introducing unit 23 is connected. The gas introducing unit 23 includes a gas tank 231 in which a compressible fluid including a foaming agent is stored, and a measuring pump 232 that supplies the compressible fluid in the gas tank 231 to the compressible-fluid supply area b for a defined amount.

In the material mixing/melting area a, the compressible fluid including the foaming agent is supplied by a measuring pump 132 to a material mixture in which the filler is wet as a result that resin pellets are brought into a molten state by applied heat, to plasticize the molten resin.

Kneading Area

The plastic composition to which the compressible fluid is supplied in the compressible-fluid supply area b is extruded to the kneading area c.

In the kneading area c, it is set to a temperature enabling to obtain viscosity suitable for kneading the filler. The set temperature varies depending on specifications of a device, types of resin, structure and molecular weight of resin, and the like. Therefore, it is not particularly limited, but in the case of commercially available polylactic acid of weight-average molecular weight (Mw) of the order of 200,000, ordinary kneading is performed at set temperature that is higher than the melting point of the polylactic acid by 10°C to 20°C. In contrast, by kneading together with a compressible fluid, kneading is possible at temperature lower than the melting point of polylactic acid. By setting temperature to temperature lower than a melting point of resin, it is possible to perform kneading at relatively high viscosity. Specifically, the set temperature is preferable to be 20°C to 80°C lower, or more preferably, 30°C to 60°C lower than the melting point of resin. In a simplified manner, temperature can be set using an electric current value of stirring force or the like of the device as an indication.

By kneading the plastic composition at temperature lower than the melting point, the kneading efficiency increases, and it is possible to make the foaming speed in the plastic composition be uniform in the die 1. This enables to suppress occurrence of corrugated lines partially in the formed foam plastic. Moreover, an incidental effect that deterioration, such as burn and stain, and occurrence of carbonization, oxidization, and decomposition inside an extruder 11 can be suppressed can also be obtained.

Extruding Area

Kneading is performed in the kneading area c of the first extruder 21A, and it is supplied to the extruding area d of the second extruder 21B. To a distal end (downstream end in an extrusion direction) of the extruding area d, a die 1 that is an extrusion molding die is attached. when extruded from the die 1, the plastic composition foams, and thereby a cylindrical foam plastic is formed.

As for the set temperature of the extruding area d in which the foaming process to foam the plastic composition is performed, it is preferable to set temperature of the plastic composition extruded from the die 1 to temperature lower than the melting point of the plastic composition. By setting the temperature of the plastic composition extruded from the die 1 to temperature lower than the melting point of the plastic composition, viscosity of the plastic composition can be increased and, therefore, can obtain foam plastic of a high foaming rate.

Forming Process Area

In a forming process area e, a mandrel 25 in which the cylindrical foam plastic extruded from the die 1 is cooled is arranged. By aligning the cylindrical foam plastic extruded from the die 1 along on the mandrel 25, and by cooling an outer surface thereof by blowing air from an airing, a cylindrical foam plastic is formed. Thereafter, the cooled cylindrical foam plastic is cut open by a cutter to be formed into a flat sheet, is let pass through a roller 26, and then is wound on a winding roller 27, to obtain a foam sheet.

Next, manufacturing of the master batch supplied to the first extruder 21A by the first quantitative feeder 22A will be explained.

FIG. 2 is a schematic configuration diagram of the kneading device 10 that manufactures the master batch.

The kneading device 10 is a double-screw extruder (manufactured by JSW, Ltd., screw diameter 42 mm, L/D=48). The kneading device 10 has, similarly to the plastic manufacturing apparatus 20 illustrated in FIG. 1, a material mixing/melting area (a), a compressible-fluid supply area (b), a kneading area (c), an extruding area (d), and a forming process area (e).

In the material mixing/melting area a, a filler is supplied by a first quantitative feeder 12A, and a resin material such as polylactic acid is supplied by a second quantitative feeder 12B. In the compressive-fluid supply area b, the compressive fluid is supplied from a gas introducing portion 13 for a defined amount. After kneaded in the kneading area C, it is extruded to the extruding area d.

In the extruding area d, a pressure valve 14 is arranged. After the compressible fluid of the plastic composition is ejected to outside by releasing the pressure valve 14, the plastic composition is extruded in a strand shape. After cooling this extruded plastic composition in a strand shape, it is pelletized by a cutter in the forming process area e, and a master batch in a pellet form is manufactured.

As for the foaming rate of foam plastic, the higher the foaming rate is, the more cost advantage it has. In terms of cost, the foaming rate of foam plastic is preferable to be 5-fold or more, more preferable to be 10-fold or more, further more preferable to be 20-fold or more, still further preferable to be 30-fold or more, and particularly preferable to be 40-fold or more. In the case of the rate of 45-fold or more, a value as a general foam plastic is reduced from the viewpoint of strength reduction, and it is therefore used for packing materials.

Moreover, for the use of the formed foam plastic for a secondary formation of a disposable container, a blister pack, and the like, the foaming rate is preferable to be 1 to 30-fold, more preferable to be 1 to 10-fold, and further more preferable to be 1 to 3-fold. For this use, the uniformity of sheet is demanded. Because a nonuniform sheet causes breakage of the sheet at the time of processing, or a defect in the secondary formation, the sheet being nonuniform is not acceptable. Because of the above reasons, it is particularly preferable that the foaming rate be 1-fold to 30-fold, and the sheet be uniform.

To manufacture a sheet of foam plastic highly uniform in the foaming rate and a basis weight, it is important to extrude the plastic composition from the die 1 uniformly in the circumferential direction. Particularly, in the present embodiment, by cooling the plastic composition heated to the melting point or higher to temperature equal to or lower than the melting point in a plastic flow channel of the die 1 in the extruding area d, to increase the viscosity of the plastic composition in the plastic flow channel, a highly foaming sheet is obtained. If temperature distribution in the circumferential direction of the die 1 is nonuniform, the viscosity of the plastic composition in the plastic flow channel of the die 1 varies in the circumferential direction, and it cannot be extruded out from the die 1 at the same speed in the circumferential direction, and a sheet nonuniform in the foaming rate and basis weight can be formed. Therefore, it is important to cool the plastic composition in the plastic flow channel of the die 1 uniformly in the circumferential direction by making the temperature in the circumferential direction of the die 1 uniform. The circumferential direction herein is a rotation direction about an extrusion center axis of a die.

Deterioration of uniformity of a foam sheet is caused by reduced uniformity in temperature near an extrusion outlet of the die 1, and is more affected by nonuniformity of temperature near the extrusion outlet of the die as the foaming rate increases.

Therefore, in the present embodiment, a temperature adjusting channel through which a temperature adjusting medium is made flow is provided near the extrusion outlet of the die 1, to reduce temperature variation in the circumferential direction of the die 1, so that a sheet having a high uniformity in the foaming rate and the basis weight can be obtained. In the following, a characteristic part of the present embodiment will be explained by using the drawings.

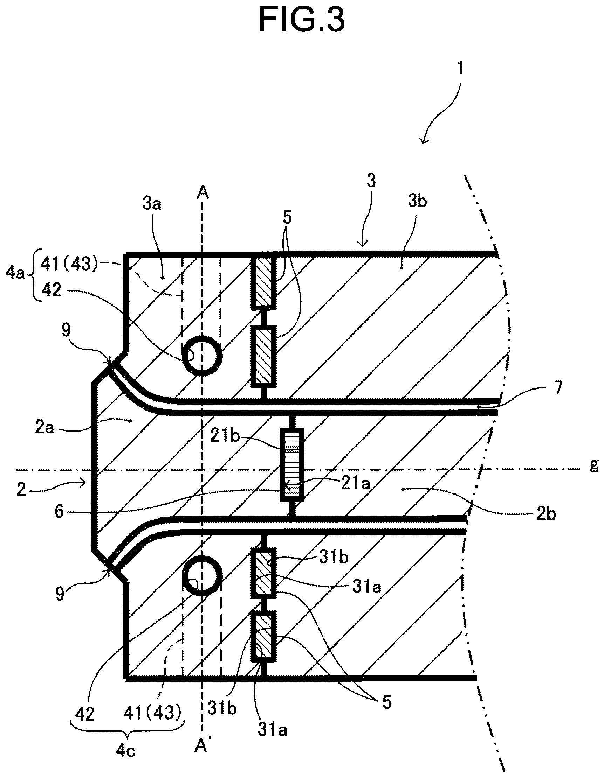

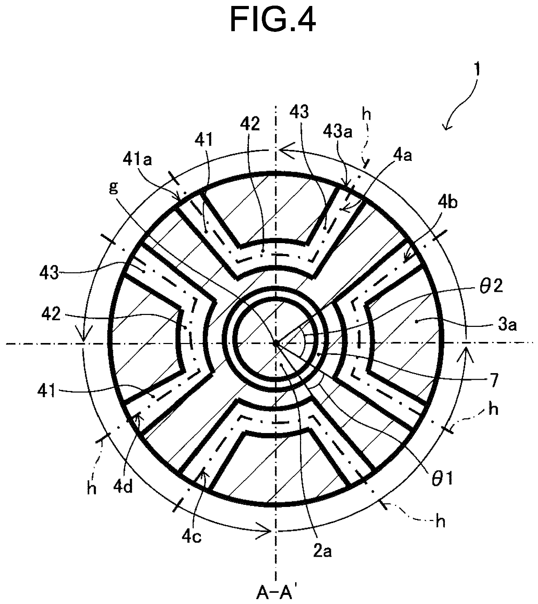

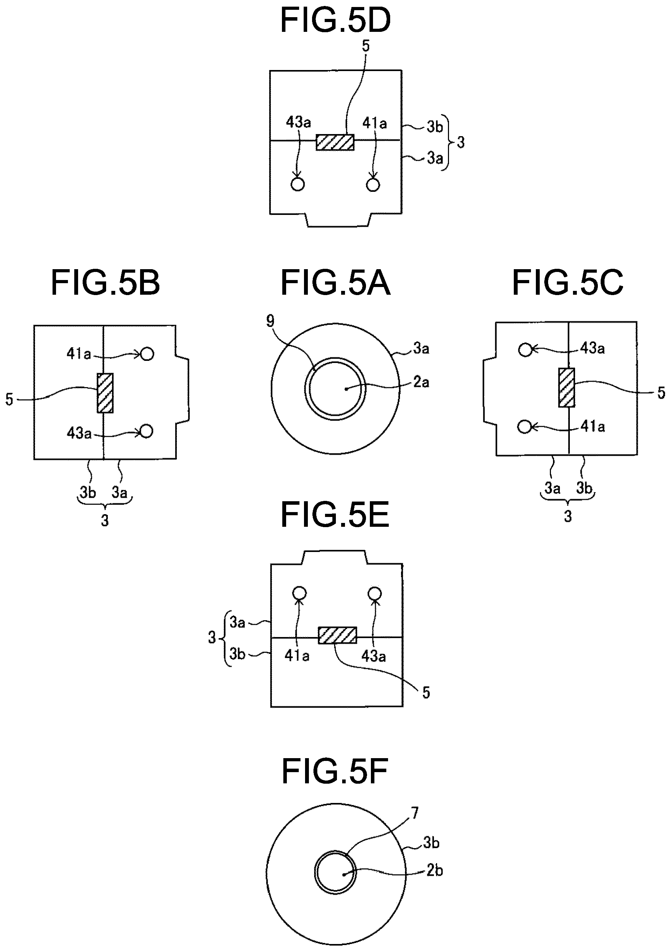

FIG. 3 is an enlarged cross-section of a principal part of a die, and FIG. 4 is a cross-section along A-A' in FIG. 3. Moreover, FIGS. 5A to 5F schematically illustrate six sides of the die 1. FIG. 5A is a front view of the die, FIG. 5B is a left side view of the die, and FIG. 5C is a right side view of the die. Furthermore, FIG. 5D is a top view (plan view) of the die 1, FIG. 5D is a bottom view of the die 1, and FIG. 5F is a rear view of the die 1.

FIG. 3 is a cross-section including an extrusion center axis g of the die 1.

The die 1 includes an outer die 3 having a through hole that pierces through in an extrusion direction (direction from the right to the left in the drawing) of the plastic composition, and an inner die 2 that is arranged inside the through hole of the outer die 3, keeping predetermined space from an inner periphery of the through hole. The space between an outer periphery of an inner die 2a and the inner periphery of the through hole of an outer die 3a is to be a plastic flow channel 7 through which the plastic composition flows.

For the outer die 3 and the inner die 2, S45C, S50C, SS400, SCM440, SUS316, SUS304, and a material equivalent to these can be used. Moreover, for the purpose of increasing durability, various kinds of plating, such as hard chrome plating, may be applied, or for the purpose of increasing thermal conductivity, C2810, A5052, alumina, and the like may be selected. Furthermore, for the purpose of analysis, quartz glass may be used, or for the purpose of increasing mold releasability, mirror finishing may be applied. Furthermore, blast finish may be applied, or a mold releasing agent may be applied. Moreover, a die, the die structure of which is variable may be used.

The outer die 3 includes the first outer die 3a that is arranged at a distal end in the extrusion direction of the plastic composition, and a second outer die 3b that is arranged upstream of the first outer die 3a in the extrusion direction of the plastic composition. On a surface of the second outer die 3b opposing to the first outer die 3a, plural concave portions 31b are formed, and the surface of the second outer die 3b opposing to the first outer die 3a is discontinuous. At a portion opposing to the concave portion 31a of the second outer die 3b on a surface of the first outer die 3a opposing to the second outer die 3b, a concave portion 31a is formed.

In the respective concave portions 31b of the second outer die 3b, a joint metal 5 is fit, and as this joint metal 5 is fit in the concave portion 31a of the first outer die 3a, the first outer die 3a is held on the second outer die 3b. Shapes of the concave portions 31a, 31b are only necessary to be a shape in which a joint metal is fit, and surfaces of the concave portions 31a, 31b may be curved surface.

By forming the outer die 3 with two parts, which are the first outer die 3a and the second outer die 3b, the number and shape of the temperature adjusting channel, the shape of a portion near the extrusion outlet of the plastic flow channel, and the like can be changed by replacing the first outer die 3a. This can reduce manufacturing cost compared to a case in which the number and shape of the temperature adjusting channel, the shape of a portion near the extrusion outlet of the plastic flow channel, and the like are changed by replacing the entire outer die 3.

The inner die 2 also include a first inner die 2a that is arranged at a distal end in the extrusion direction of the plastic composition, and a second inner die 2b that is arranged upstream of the first inner die 2a in the extrusion direction of the plastic composition. A connection portion of the first inner die 2a and the second inner die 2b is positioned upstream of the connection portion of the first outer die 3a and the second outer die 3b in the extrusion direction of the plastic composition. As described, the connection portion of the first inner die 2a and the second inner die 2b, and the connection portion of the first outer die 3a and the second outer die 3b are arranged at positions different from each other in the extrusion direction of the plastic composition.

On a surface of the second inner die 2b opposing to the first inner die, a concave portion 21b is formed, and at a portion opposing to the concave portion 21b of the second inner die 2b on a surface of the first inner die 2a opposing to the second outer die 3b, a concave portion 21a is formed.

In the concave portion 21b of the second inner die 2b, a joint metal 6 is fit, and as this joint metal 6 is fit in the concave portion 21a of the first inner die 2a, the first inner die 2a is held on the second inner die 2b.

By forming the inner die 2 also with two parts, which are the first inner die 2a and the second inner die 2b, the shape of a portion near an extrusion outlet 9 of the plastic flow channel 7 and the like can be changed by replacing the first inner die 2a. This can reduce manufacturing cost compared to a case in which the shape of a portion near the extrusion outlet of the plastic flow channel and the like are changed by replacing the entire inner die 2.

By making an inner diameter on the upstream side of the through hole of the first outer die 3a in the extrusion direction the same dimension as an inner diameter of the through hole of the second outer die 3b, the connection portion of the first outer die 3a and the second outer die 3b of the plastic flow channel 7 can be made smooth without steps. This enables the plastic composition to be smoothly pushed out without stagnating at the connection portion. Moreover, as illustrated in FIG. 3, on a cross-section parallel to the extrusion center axis g including the extrusion center axis g of the die 1, an outer inner-wall surface of the plastic composition formed with the inner periphery of the through hole of the outer die at the connection portion is formed in a straight line parallel to the extrusion center axis g. Thus, the first outer die 3a can be connected intimately to the second outer die, and it can prevent the plastic composition from flowing into space between the first outer die 3a and the second outer die at the connection portion favorably. Moreover, because the direction of flow of the plastic composition does not change at the connection portion, it is possible to suppress stagnation of the plastic composition at the connection portion, and it is possible to prevent the plastic composition from flowing into the space between the first outer die 3a and the second outer die favorably.

An outer diameter of the second inner die 2b is a perfect circle of the same dimension in the extrusion direction. An outer diameter of the first inner die 2a has the same dimension as the outer diameter of the second inner die 2b except for a portion near a downstream end portion in the extrusion direction. The outer diameter near the downstream end portion in the extrusion direction of the first inner die 2a gradually becomes larger downstream in the extrusion direction.

By making the outer diameter on the upstream side of the first inner die 2a in the extrusion direction the same dimension as the outer diameter of the second inner die 2b, the connection portion of the first inner die 2a and the second inner die 2b of the plastic flow channel 7 can be made smooth without steps. As a result, the plastic composition does not stagnate at the connection portion, and can be extruded out smoothly. Moreover, as illustrated in FIG. 3, on the cross-section parallel to the extrusion center axis g including the extrusion center axis g of the die 1, the inner inner-wall surface of the plastic composition formed with the outer periphery of the inner die at the connection portion is formed in a straight line parallel to the extrusion center axis g. Thus, the first inner die 2a can be connected intimately to the second inner die 2b at this connection portion, and it is possible to prevent the plastic composition from flowing into the space between the first inner die 2a and the second inner die 2b at the connection portion favorably. Furthermore, because the direction of flow of the plastic composition does not change at the connection portion, it is possible to suppress stagnation of the plastic composition at the connection portion, and it is possible to prevent the plastic composition from flowing into the space between the first inner die 2a and the second inner die 2b favorably.

Near the extrusion outlet 9 of the first outer die 3a, as illustrated in FIG. 4, temperature adjusting channels 4a, 4b, 4c, and 4d through which a temperature adjusting medium flows are arranged. When the extrusion center axis g is the center of rotation, the respective temperature adjusting channels are arranged at positions shifted by 90° in a rotation direction from the temperature adjusting channels adjacent thereto. Moreover, as illustrated in FIG. 4, on a cross-section perpendicular to the extrusion center axis g, shapes of the respective temperature adjusting channels are the same. As a result, in a projection toward the direction of the extrusion center axis g, it overlaps the adjacent temperature adjusting channel when the die 1 is rotated by 90 (360/4)° about the extrusion center axis g.

The respective temperature adjusting channels 4a, 4b, 4c, and 4d have a flow-in channel 41 to which the temperature adjusting medium flows in, a relay channel 42 as a channel portion in which the temperature medium is made flow along the plastic flow channel 7 in the circumferential direction, and an ejection channel 43 to eject the temperature medium. The flow-in channel 41 has a flow inlet 41a arranged on the outer periphery of the first outer die 3a, and extends substantially toward the extrusion center axis g. The relay channel 42 is connected to a downstream end portion of the flow-in channel 41 in a flowing direction of the temperature adjusting medium, and the temperature adjusting medium in the flow-in channel 41 flows in. The temperature adjusting medium that has flowed into the relay channel 42 flows in the circumferential direction along the plastic flow channel 7, and then flows into the ejection channel 43. The temperature adjusting medium that has flowed into the ejection channel 43 flows toward the other periphery of the first outer die, and is ejected from the ejection outlet provided on the outer periphery of the first outer die.

In the present embodiment, the temperature adjusting medium to be made flow into the respective temperature adjusting channels 4a, 4b, 4c, and 4d is a coolant to cool the die 1, and water, air, and oil can be used. A more preferable temperature adjusting medium is oil.

The respective temperature adjusting channels 4a, 4b, 4c, and 4d have a managing device that manages temperature of the temperature adjusting medium, and the respective managing devices measure temperature of the temperature adjusting medium by a temperature sensor, and manage the temperature of the temperature adjusting medium that flows into the temperature adjusting channel 4a based on the measurement result.

As described, by providing the managing device to manage temperature of the temperature adjusting medium in each of the temperature adjusting channels 4a, 4b, 4c, and 4d, temperature of the die 1 can be precisely controlled, and the temperature of the die 1 in the circumferential direction can be made uniform well.

As can be seen from FIG. 4, a channel center line h of the respective temperature adjusting channels 4a, 4b, 4c, and 4d is present on a plane of an arbitrary unit perpendicular to the extrusion center axis g, and temperature at the same position in the direction of the extrusion center axis of the die 1 of the respective temperature adjusting channels 4a, 4b, 4c, and 4d is adjusted. This enables to manage the temperature in the circumferential direction of the die 1 precisely, and variation in temperature in the circumferential direction of the die 1 can be reduced. Therefore, the plastic composition in the plastic flow channel is cooled uniformly in the circumferential direction at the positions surrounded by the temperature adjusting channels.

For example, a portion in which the temperature of the plastic composition in the plastic flow channel is different from other portions in the circumferential direction may be generated on an upstream side in the extrusion direction relative to the portion surrounded by the temperature adjusting channels for some reasons. In the present embodiment, three or more temperature adjusting channels are provided, and the temperature of the temperature adjusting medium flowing through the respective temperature adjusting channels is controlled independently, and precise temperature control in the circumferential direction is thereby enabled. Therefore, even if there is a portion in which the temperature is different from other portions of the plastic composition in this circumferential direction, by varying the temperature of the temperature adjusting medium flowing in the temperature adjusting channel corresponding to the position and the temperature of the temperature adjusting medium to be made flow into the other temperature adjusting channels, following effects are obtained. That is, an effect that the temperature at that position can be brought to the same temperature as the temperature of the others is obtained. Therefore, the temperature of the plastic composition that has passed through the position surrounded by the temperature adjusting channels can be made uniform in the circumferential direction. As a result, variation in viscosity of the plastic composition in the plastic flow channel in the circumferential direction can be suppressed, and the plastic composition can be extruded uniformly from the extrusion outlet 9 of the die 1. Accordingly, a uniform plastic sheet with a high foaming rate in which the basis weight and foaming rate are uniform can be formed.

Moreover, in the present embodiment, the respective temperature adjusting channels are arranged at positions shifted by 90° from adjacent channels in the rotation direction when the extrusion center axis g is the center of rotation as described above. Furthermore, on the cross-section illustrated in FIG. 4, the shapes of the respective temperature adjusting channels are the same, and the respective temperature adjusting channels 4a to 4d vertically projected in the direction of the extrusion center axis g are point symmetrical about the extrusion center axis g. Thus, it is possible to make temperature near the extrusion outlet 9 of the die 1 uniform in the circumferential direction by these temperature adjusting channels, and is possible to make the plastic composition in the plastic flow channel uniform in temperature in the circumferential direction at temperature equal to or lower than the melting point of the plastic composition. Accordingly, variation in viscosity of the plastic composition in the plastic flow channel in the circumferential direction can be suppressed. Therefore, the plastic composition can be extruded at a uniform speed in the circumferential direction from the extrusion outlet 9 of the die 1, and a uniform plastic sheet with a high foaming rate in which the basis weight and foaming rate are uniform can be formed.

In the present embodiment, the respective temperature adjusting channels are arranged at positions shifted by 90° from adjacent temperature adjusting channels in the rotation direction, but the arrangement may be shifted by ±10% relative to 90°. At least, by arranging to overlap the temperature adjusting channels adjacent to each other within this range, the die can be made uniform in temperature in the circumferential direction.

Moreover, the shapes of the respective temperature adjusting channels are not necessarily the same, and the respective temperature adjusting channels 4a to 4d vertically projected in the direction of the extrusion center axis g are not necessarily point symmetrical about the extrusion center axis g. That is, as long as the temperature near the extrusion outlet 9 of the die 1 can be made uniform in the circumferential direction by these temperature adjusting channels, the shapes of the respective temperature adjusting channels may vary to some extent.

Furthermore, in the present embodiment, three or more temperature adjusting channels are provided. This enables to shorten a channel length of the respective temperature adjusting channels compared to a case in which the number of temperature adjusting channel is two or less, and to reduce a temperature difference between the flow inlet 41a and an ejection outlet 43a of the temperature adjusting medium. Thus, a difference between a heat exchange rate of a die near the flow inlet 41a of the temperature adjusting medium and a heat exchange rate of the die near the ejection outlet 43a can be reduced, and variation in temperature in the circumferential direction of the die can be favorably suppressed.

Moreover, by providing three or more temperature adjusting channels, temperature of the die 1 in the circumferential direction can be controlled precisely compared to a case in which the number of temperature adjusting channel is two or less, and temperature of the die 1 in the circumferential direction can be made uniform well.

Furthermore, in the present embodiment, the respective temperature adjusting channels 4a, 4b, 4c, and 4d have the relay channel 42 through which the temperature adjusting medium is made flow along the plastic flow channel 7 in the circumferential direction, respectively. Distances between these relay channels 42 and the plastic flow channel 7 are uniform. As described, by providing the relay channel 42 through which the temperature adjusting medium is made flow, keeping a predetermined distance from the plastic flow channel 7, it is possible to draw heat from the plastic composition in the plastic flow channel 7 uniformly in the circumferential direction. This enables to reduce temperature of the plastic composition in the plastic flow channel 7 favorably to the melting point of the plastic composition or lower, and to obtain a sheet of a high foaming rate. Moreover, it is possible to make temperature of the plastic composition in the plastic flow channel uniform in the circumferential direction, and variation in viscosity of the plastic composition in the plastic flow channel in the circumferential direction can be suppressed. Therefore, the plastic composition can be extruded uniformly from the extrusion outlet 9 of the die 1. Therefore, a uniform plastic sheet with a high foaming rate in which the basis weight and foaming rate are uniform can be formed.

Moreover, as illustrated in FIG. 4, an angle θ2 formed between a line segment connecting an upstream end portion in a flowing direction of the temperature adjusting medium of the relay channel 42 and the extrusion center axis g and a line segment connecting a downstream end portion in the flowing direction of the temperature adjusting medium of the relay channel 42 and the extrusion center axis g is equal to or smaller than 120°. Thus, compared to a case in which θ2 described above exceeds 120°, a channel length of the relay channel 42 can be formed short. As a result, a difference between temperature of the temperature adjusting medium at the upstream end portion in the flowing direction of the temperature adjusting medium of the relay channel 42 and temperature of the temperature adjusting medium at the downstream end portion in the flowing direction of the temperature adjusting medium of the relay channel 42 can be reduced compared to the case in which θ2 described above exceeds 120°. Thus, a difference between a heat exchange rate of the temperature adjusting medium near the upstream side of the flowing direction of the temperature adjusting medium of the relay channel 42 with the die 1 and a heat exchange rate of the temperature adjusting medium near the downstream side of the flowing direction of the temperature adjusting medium of the relay channel 42 with the die 1 can be reduced. This enables to make the cooling performance in the relay channel 42 uniform, to cool uniformly in the circumferential direction.

Moreover, as illustrated in FIG. 4, in two temperature adjusting channels adjacent to each other, an angle θ1 formed between a line segment connecting a position of one temperature adjusting channel closest to the other temperature adjusting channel and the extrusion center axis g, and a line segment connecting a position of the other temperature adjusting channel closest to one temperature adjusting channel and the extrusion center axis g is equal to or smaller than 15°. Thus, the two temperature adjusting channels adjacent to each other can be positioned close to each other, and it is possible to suppress increase of temperature of the die 1 between the temperature adjusting channels to become higher than other parts in the circumferential direction. Accordingly, temperature of the die 1 can be made uniform in the circumferential direction.

Moreover, in two temperature adjusting channels adjacent to each other, it is preferable that a distance between the relay channel of one temperature adjusting channel and the relay channel of the other temperature adjusting channel be the shortest. Thus, temperature of the plastic composition in the plastic flow channel can be made uniform favorably.

As illustrated in FIG. 4, in two temperature adjusting channels adjacent to each other, the flow-in channel 41 of one temperature adjusting channel is adjacent to the ejection channel 43 of the other temperature adjusting channel. Thus, compared to a case in which the flow-in channel 41 of the other temperature adjusting channel is adjacent to the flow-in channel 41 of one temperature adjusting channel, or a case in which the ejection channel 43 of the other temperature adjusting channel is adjacent to the ejection channel 43 of one temperature adjusting channel, following effects are obtained. That is, it is possible to suppress temperature between the temperature adjusting channels of the die 1 becoming significantly different from temperature of other portions in the circumferential direction, and temperature of the die 1 can be made uniform in the circumferential direction.

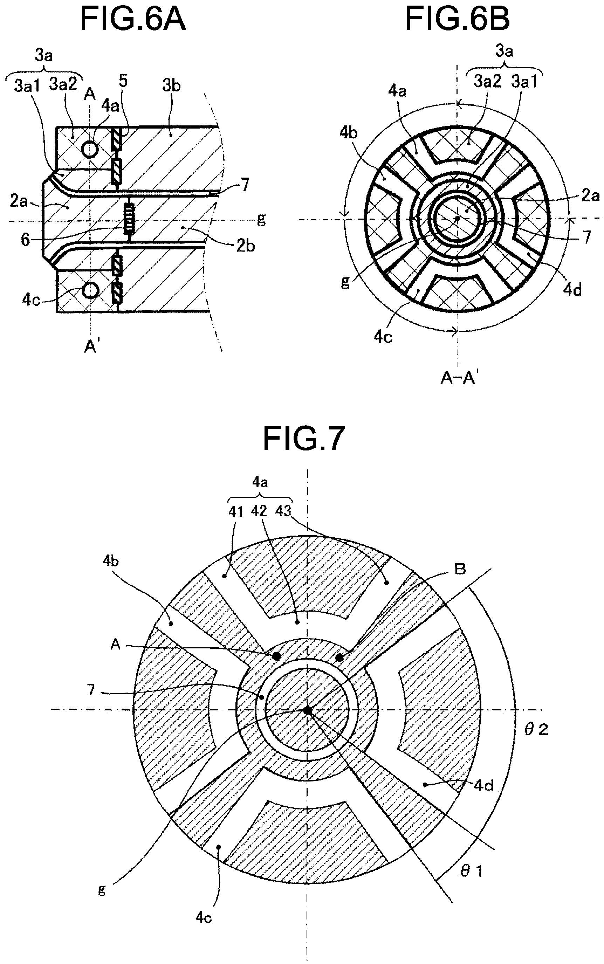

FIGS. 6A and 6B illustrate a modification of the die 1. FIG. 6A is a cross-section including the extrusion center axis g of a die of the modification cut along a plane parallel to the extrusion axis direction, and FIG. 6B is an A-A' cross-section of FIG. 6A.

In the die illustrated in FIGS. 6A and 6B, the first outer die 3a includes a first member 3a1 forming the plastic flow channel 7, and a second member 3a2 that includes plural temperature adjusting channels and that externally contacts the first member 3a1. With this arrangement, the number of the temperature adjusting channels and the like can be changed by replacing the second member 3a2 for the first member 3a1. Moreover, because the plastic flow channel 7 is not formed therein, it is not necessary to manufacture the second member 3a2, forming an inner diameter of the through hole precisely. Therefore, compared to a case in which the number of the temperature adjusting channels and the like are changed by replacing the first outer die 3a for the second outer die 3b, the number of the temperature adjusting channels and the like can be changed at low cost.

Next, evaluation tests performed by the present applicant will be explained.

First, fabrication of a plastic foam sheet used for evaluation will be explained.

Fabrication of Plastic Foam Sheet

For fabrication of plastic foam sheet, the plastic manufacturing apparatus 20 illustrated in 1 was used. As the first extruder 21A and the second extruder 21B of the plastic manufacturing apparatus 20, a double screw extruder (manufactured by JSW, Ltd., screw diameter 42 mm, L/D=48) was used. A sheeted plastic foam was fabricated, attaching dies of a first to a third embodiments and a first comparative example to a downstream end portion of the extrusion direction of the second extruder 21B, and presence and absence of corrugated lines were evaluated. The dies of the first to the third embodiments and the first comparative example have an external diameter of 70 mm, and the material is chrome-plated SCM440.

By using the kneading device 10 illustrated in FIG. 2, a filler master batch of 3% by mass was fabricated. This master batch was set to the first quantitative feeder 22A of the plastic manufacturing apparatus 20 illustrated in FIG. 1. The master batch was supplied to the material mixing/melting area a of the first extruder 21A from the first quantitative feeder 22A at 1.67 kg/hr per unit time. Moreover, polylactic acid (Revode110 of HISUN, melting point 160°C) was supplied to the material mixing/melting area a at 8.33 kg/hr per unit time from the second quantitative feeder 22B. Thus, a plastic composition containing polylactic acid of 90% by mass or more can be obtained.

In the compressible-fluid supply area b, carbon dioxide was supplied as the compressible fluid. While changing the supply amount of the compressible fluid to be supplied, a foaming rate was adjusted.

The plastic composition to which this compressible fluid was supplied was kneaded in the kneading area c of the first extruder 21A, to be supplied to the extruding area d of the second extruder 21B. By removing the compressible fluid from the kneaded plastic composition at the extruding area d, a foam that has been extruded and foamed was obtained. The extrusion amount of the plastic composition from the die 1 was 10 kg/h, and temperature of the plastic composition extruded from the die 1 was 150°.

Temperature at the material mixing/melting area a and the compressible-fluid supply area b in the first extruder 21A was set to 190°.

Moreover, temperature in the kneading area c in the first extruder 21A was set to 150°, which is the temperature 10°C lower than the melting point of polylactic acid (160°C). Moreover, temperature of the extruding area d in the second extruder 21B was set to 167°C. Furthermore, pressure in a portion from the compressible-fluid supply area b to the kneading area c, and the extruding area d in the second extruder 21B (more precisely, the die 1) was set to 7.0 MPa or higher.

Evaluation Method of Foam

Foaming Rate

The foaming rate of the foam plastic can be acquired by dividing density (real density $\rho 0$) of a composition constituting the foam plastic by bulk density ($\rho 1$) as indicated by following Equation (*).

$$\text{Foaming rate} = \text{real density } (\rho 0)/\text{bulk density } (\rho 1) \qquad *$$

The real density herein is a density of the plastic composition remaining as the final plastic composition, and may be a literature value or may be a value acquired by actually measuring non-foaming compound pellet. In the case of polylactic acid, it is approximately 1.25 g/cm$^3$.

The bulk density is acquired by measurement. A measuring method of the bulk density is not particularly limited, and any measuring method of bulk density can be appropriately used. For example, the bulk density can be measured by a method as follows. An external dimension of a foam sheet that has been left for 24 hours or more in an environment of relative humidity of 50% is measured, to acquire a bulk volume. Subsequently, a weight of this foam sheet is measured. By dividing the weight of the foam sheet by the bulk volume, the bulk density of the foam sheet is acquired.

Surface Uniformity Evaluation

In surface uniformity evaluation, thickness of the plastic foam sheet is measured by using a caliper at 10 points in a width direction of the plastic foam sheet, and an arithmetic mean value of thickness was calculated. Next, a value acquired by dividing a maximum thickness by the arithmetic mean value and a value acquired by dividing a minimum thickness by the arithmetic mean value were calculated, and evaluation was performed with these calculated values. As maximum thickness/arithmetic mean value of thickness and minimum thickness/arithmetic mean value of thickness become close to 1, it can be regarded that a surface is uniform.

It was determined as "◎" when maximum thickness/arithmetic mean value of thickness is 1.0 to 1.1, and minimum thickness/arithmetic mean value of thickness is 0.9 to 1.0. A sheet determined as "◎" has high surface uniformity, and has excellent strength and flexibility as a sheet.

Moreover, it is determined as "○" when maximum thickness/arithmetic mean value of thickness is 1.1 to 1.2, or minimum thickness/arithmetic mean value of thickness is equal to or larger than 0.8 and smaller than 0.9. A sheet determined as "○" has favorable surface uniformity, and favorable strength and flexibility as a sheet can be obtained.

In contrast, it is determined as "×" when maximum thickness/arithmetic mean value of thickness is equal to or larger than 1.2, or minimum thickness/arithmetic mean value of thickness is smaller than 0.8. A sheet determined as "×" has poor surface uniformity, and sufficient strength and flexibility as a sheet cannot be obtained.

Temperature Difference Measurement

Temperature at plural points in the circumferential direction at a position upstream from the extrusion outlet 9 of the die 1 in the extrusion direction by 3 mm in the direction of the extrusion center axis was measured with non-contact thermometer, and temperature differences in the circumferential direction were acquired.

Dies of the first to a tenth embodiments, and the first to a third comparative examples in which the number of temperature adjusting channels and shapes of the temperature adjusting channels are different from one another were prepared, and evaluation test was performed. Table 1 below shows summary of the evaluation test results of the first to the tenth embodiments and the first to the third comparative examples.

Table 1

| | Temperature difference (°C) | Maximum thickness/ arithmetic mean value of thickness | Minimum thickness/ arithmetic mean value of thickness | Surface uniformity evaluation |
|---|---|---|---|---|
| First embodiment | 1.5 | 1.12 | 0.88 | ○ |
| Second embodiment | 1.2 | 1.11 | 0.89 | ○ |
| Third embodiment | 0.8 | 1.08 | 0.92 | ◎ |
| Fourth embodiment | 0.6 | 1.04 | 0.96 | ◎ |
| Fifth embodiment | 1.7 | 1.13 | 0.87 | ○ |
| Sixth embodiment | 1.8 | 1.14 | 0.86 | ○ |
| Seventh embodiment | 2.0 | 1.15 | 0.85 | ○ |
| Eighth embodiment | 2.2 | 1.16 | 0.84 | ○ |
| Ninth embodiment | 2.5 | 1.18 | 0.82 | ○ |
| Tenth embodiment | 3.0 | 1.20 | 0.80 | ○ |
| First comparative example | 3.2 | 2.00 | 0.50 | × |
| Second comparative example | 4.0 | 2.50 | 0.40 | × |
| Third comparative example | 3.7 | 2.25 | 0.44 | × |

First Embodiment

FIG. 7 is a schematic cross-section of a die according to the first embodiment.

As illustrated in FIG. 7, the die of the first embodiment has four temperature adjusting channels arranged at positions shifted by 90° in a rotation direction about the extrusion center axis g to have the same shapes on a cross-section perpendicular to the extrusion center axis g. Moreover, the angle θ1 is set to be equal to or smaller than 15°, and the angle θ2 is set to be equal to or smaller than 90°. Moreover, the four temperature adjusting channels 4a to 4d are formed at the same positions in the extrusion center axis near the extrusion outlet 9 of the die 1, such that channel center lines of the respective temperature adjusting channels are positioned on a plane of a unit perpendicular to the extrusion center axis g. Specifically, the temperature adjusting channels 4a to 4d each include the flow-in channel 41 in which a temperature adjusting medium flows, the relay channel 42 through which the temperature adjusting medium is made flow along the plastic flow channel 7 in the circumferential direction, and the ejection channel 43 from which the temperature adjusting medium is ejected. Temperature near the extrusion outlet 9 of the die was adjusted by supplying oil of 110°C to the temperature adjusting channels 4a to 4d, and foams of the foaming rate of 1-fold to 35-fold were obtained by using the manufacturing apparatus illustrated in FIG. 1 while changing the supply amount of the compressible fluid. Moreover, temperature at points A (near an entrance of the relay channel 42) and B (near an exit of the relay channel 42) indicated in FIG. 7 at a position upstream from the extrusion outlet 9 of the die 1 by 3 mm in the extrusion direction in the direction of the extrusion center axis was measured by a non-contact thermometer. For either one of the foams of 1-fold to 35-fold foaming rates, the surface uniformity evaluation was "○", and sheets having favorable surface uniformity were obtained. Moreover, a temperature difference between the points A and B indicated in FIG. 7 was 1.5°C.

In this first embodiment, the foaming rate is changed by changing the supply amount of the compressible fluid, but the foaming rate may be changed by any of methods described below, or by a combination of the methods. That is, any one of or a combination of the methods of kneading temperature, retention time, atmosphere, foaming agent concentration, types of foaming agent, uniformity of foaming agent, distribution of plastic molecular weight, delivery speed, and the like may be applied. These foaming rate suppression factors can change the uniformity of a sheet eventually or indirectly by changing the foaming rate, but cannot improve the uniformity of a sheet essentially. Therefore, even if the foaming rate is changed by adjusting these factors, the evaluation of the uniformity of a sheet is not affected.

Second Embodiment

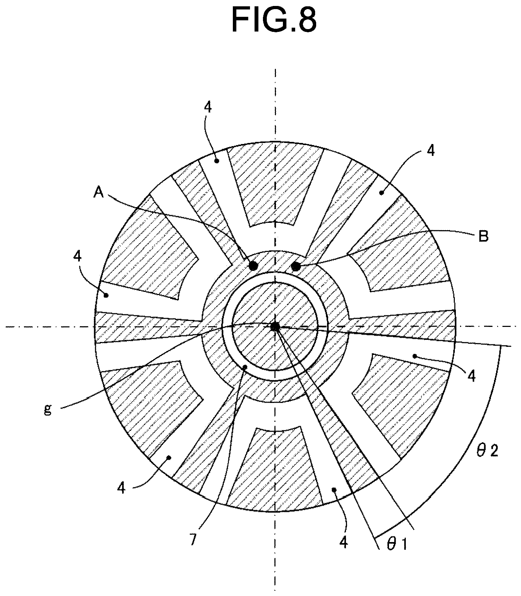

FIG. 8 is a schematic cross-section of the die according to the second embodiment.

As illustrated in FIG. 8, the die of the second embodiment has six temperature adjusting channels 4 arranged at positions shifted by 60° in a rotation direction about the extrusion center axis g to have the same shapes on a cross-section perpendicular to the extrusion center axis g. Moreover, the angle $\theta 1$ is set to be equal to or smaller than 15°, and the angle $\theta 2$ is set to be equal to or smaller than 120°. Furthermore, diameters of the respective temperature adjusting channels were adjusted appropriately so that the six temperature adjusting channels can be arranged at regular intervals in the rotation direction about the extrusion center axis g. Others except this point are the same as the die of the first embodiment.

This die is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of 1-fold to 35-fold foaming rates, the surface uniformity evaluation was "○", and sheets having favorable surface uniformity were obtained. Moreover, a temperature difference between points A and B indicated in FIG. 8 at a position upstream from the extrusion outlet 9 of the die 1 in the extrusion direction side by 3 mm in the direction of the extrusion center axis was 1.2°C.

Third Embodiment

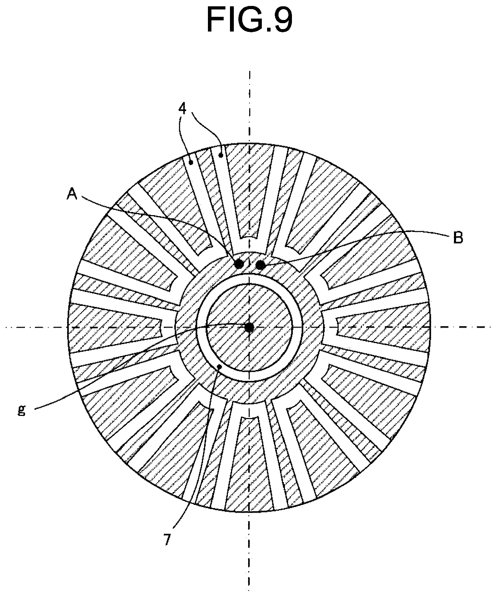

FIG. 9 is a schematic cross-section of the die according to the third embodiment.

As illustrated in FIG. 9, the die of the third embodiment has 12 temperature adjusting channels arranged at positions shifted by 30° in a rotation direction about the extrusion center axis g to have the same shapes on a cross-section perpendicular to the extrusion center axis g. The angle $\theta 1$ is set to be equal to or smaller than 15°, and the angle $\theta 2$ is set to be equal to or smaller than 120°. Moreover, diameters of the respective temperature adjusting channels were adjusted appropriately so that the 12 temperature adjusting channels can be arranged at regular intervals in the rotation direction about the extrusion center axis g. Others except this point are the same as the die of the first embodiment.

This die is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of 1-fold to 35-fold foaming rates, a maximum thickness/an arithmetic mean value of thickness was within 1.1, and a minimum thickness/an arithmetic mean value of thickness was equal to or larger than 0.9, and surface uniformity evaluation was "◎", and sheets having high surface uniformity were obtained. Moreover, a temperature difference between points A and B indicated in FIG. 9 at a position upstream from the extrusion outlet 9 of the die 1 in the extrusion direction by 3 mm in the direction of the extrusion center axis was 0.8°C.

Fourth Embodiment

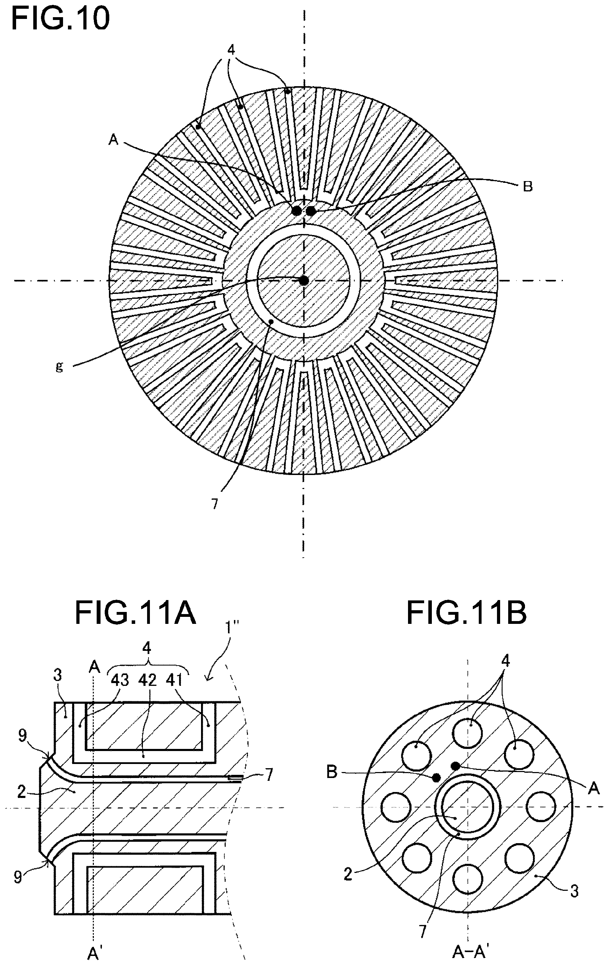

FIG. 10 is a schematic cross-section of the die according to the fourth embodiment.

As illustrated in FIG. 10, the die of the fourth embodiment has 24 temperature adjusting channels arranged at positions shifted by 15° in a rotation direction about the extrusion center axis g to have the same shapes on a cross-section perpendicular to the extrusion center axis g. The angle θ1 is set to be equal to or smaller than 15°, and the angle θ2 is set to be equal to or smaller than 120°. Furthermore, diameters of the respective temperature adjusting channels were adjusted appropriately so that the 24 temperature adjusting channels can be arranged at regular intervals in the rotation direction about the extrusion center axis g. Others except this point are the same as the die of the first embodiment.

This die is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of 1-fold to 35-fold foaming rates, similarly to the third embodiment, the surface uniformity evaluation was "◎", and sheets having high surface uniformity were obtained. Moreover, a temperature difference between points A and B indicated in FIG. 10 at a position upstream from the extrusion outlet 9 of the die 1 in the extrusion direction side by 3 mm in the direction of the extrusion center axis was 0.6°C.

Fifth Embodiment

FIGS. 11A and 11B are schematic configuration diagrams of the die according to the fifth embodiment. In the die of the fifth embodiment, the relay channels of the respective temperature adjusting channels are extended in the direction of the extrusion center axis, the flow-in channels 41 in which the temperature adjusting medium flows are arranged upstream in the extrusion direction of the plastic composition, the ejection channels 43 from which the temperature adjusting medium is ejected are arranged downstream in the extrusion direction of the plastic composition, and the temperature adjusting medium of the relay channel 42 is made flow along the plastic flow channel 7 in the direction of the extrusion center axis. Others except this point is the same as the die of the first embodiment.

This die of the fifth embodiment is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of the foaming rates of 1-fold to 35-fold, although calculated values of surface uniformity were inferior to those of the first to the fourth embodiments, the surface uniformity evaluation result was determined as "○", and sheets having favorable surface uniformity were obtained. Moreover, a temperature difference between points A and B indicated in FIG. 11B at a position upstream from the extrusion outlet 9 of the die 1 in the extrusion direction by 3 mm in the direction of the extrusion center axis was 1.2°C.

Sixth Embodiment

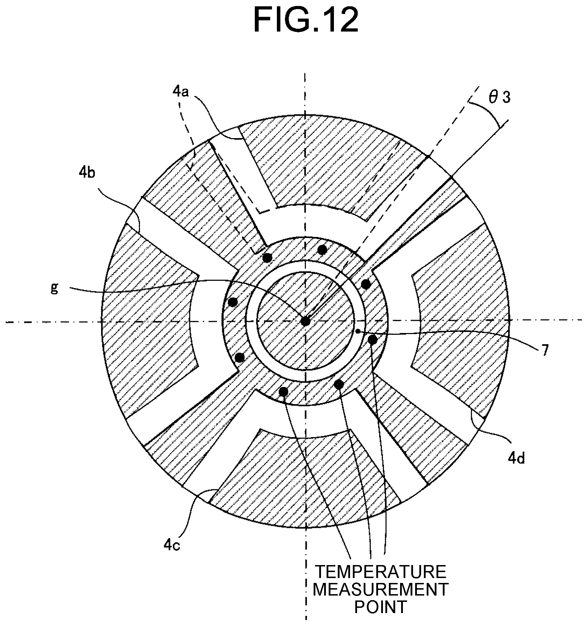

FIG. 12 is a schematic cross-section of the die according to the sixth embodiment.

As illustrated in FIG. 12, in the die of the sixth embodiment, out of four temperature adjusting channels, the temperature adjusting channel 4a at a position of 12 o'clock in the drawing (position in an upper part of the drawing) is arranged at a position shifted by 10% (θ3=9°) in a clockwise direction in the drawing relative to the temperature adjusting channel 4a (broken line in the drawing) of the die of the first embodiment. Others except this point are the same as the die of the first embodiment.

This die of the sixth embodiment is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of the foaming rates of 1-fold to 35-fold, the surface uniformity evaluation result was determined as "○", and sheets having favorable surface uniformity were obtained.

Moreover, temperature at a position upstream from the extrusion outlet 9 of the die 1 in the extrusion direction by 3 mm in the direction of the extrusion center axis was measured at eight points at intervals of 45° in the circumferential direction as indicated by black circles in the drawing by a non-contact thermometer. Out of measured temperatures of the eight points, a temperature difference between the maximum temperature and the minimum temperature was 1.5°C.

Seventh Embodiment

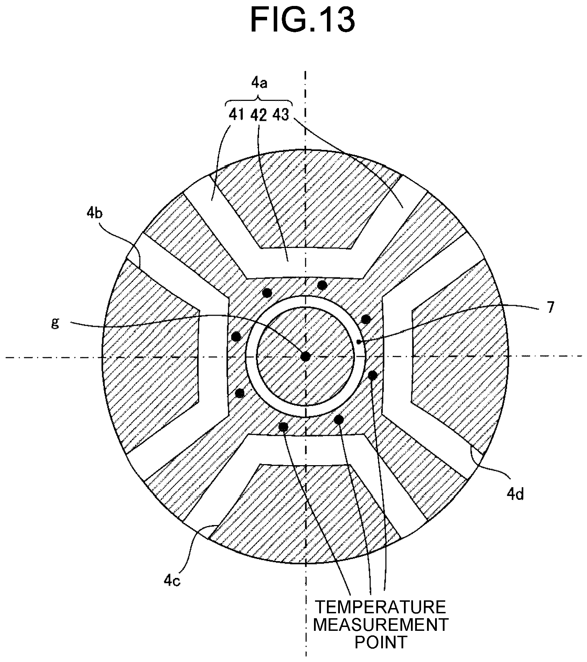

FIG. 13 is a schematic cross-section of the die according to the seventh embodiment.

As illustrated in FIG. 13, in the die of the seventh embodiment, the relay channels of the respective temperature adjusting channels 4a to 4d are formed in a shape of straight lines on a cross-section perpendicular to the extrusion center axis g. Others except this point are the same as the die of the first embodiment.

This die of the seventh embodiment is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of the foaming rates of 1-fold to 35-fold, although calculated values of surface uniformity were inferior to those of the first to the fourth embodiments, the surface uniformity evaluation result was determined as "○", and sheets having favorable surface uniformity were obtained.

In the seventh embodiment also, similarly to the sixth embodiment, temperature measurement was performed (points of black circles in the drawings). A temperature difference between the maximum temperature and the minimum temperature out of the measured temperatures of the eight points was 2.0°C.

Eighth Embodiment

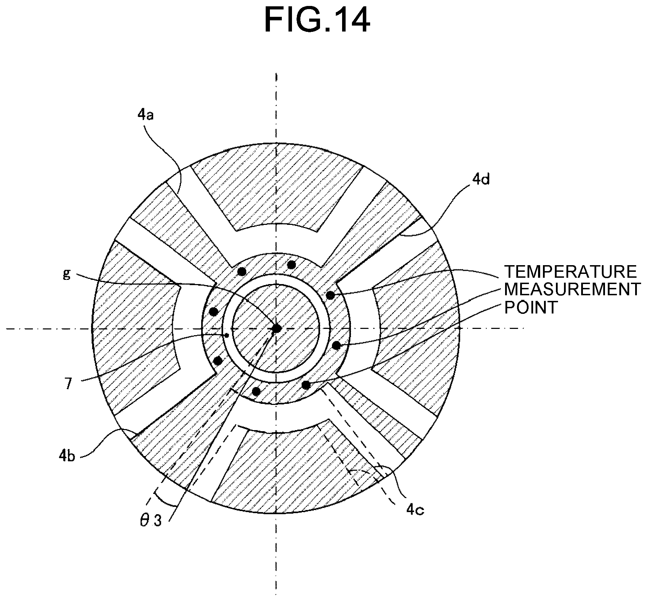

FIG. 14 is a schematic cross-section of the die according to the eighth embodiment.

As illustrated in FIG. 14, in the die of the eight embodiment, out of four temperature adjusting channels, the temperature adjusting channel 4c at a position of 6 o'clock in the drawing (position in a lower part of the drawing) is arranged at a position shifted by 10% ($\theta3=9°$) in a clockwise direction in the drawing relative to the temperature adjusting channel 4c (broken line in the drawing) of the first embodiment. Others except this point are the same as the die of the first embodiment.

This die of the eighth embodiment is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of the foaming rates of 1-fold to 35-fold, although calculated values of surface uniformity were inferior to those of the first to the fourth embodiments, the surface uniformity evaluation result was determined as "○", and sheets having favorable surface uniformity were obtained.

In the eighth embodiment also, similarly to the sixth embodiment, temperature measurement was performed (points of black circles in the drawings). A temperature difference between the maximum temperature and the minimum temperature out of the measured temperatures of the eight points was 2.2°C.

Ninth Embodiment

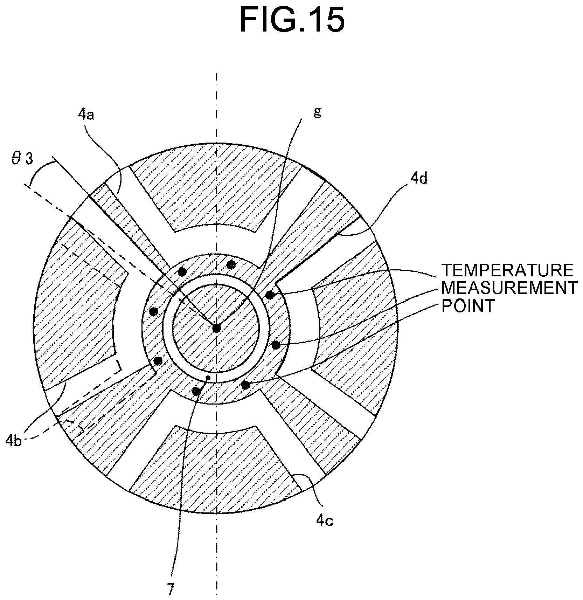

FIG. 15 is a schematic cross-section of the die according to the ninth embodiment.

As illustrated in FIG. 15, in the die of the ninth embodiment, out of four temperature adjusting channels, the temperature adjusting channel 4b at a position of 9 o'clock in the drawing (position in a lower part of the drawing) is arranged at a position shifted by 10% ($\theta3=9°$) in a clockwise direction in the drawing relative to the temperature adjusting channel 4b (broken line in the drawing) of the die of the first embodiment. Others except this point are the same as the die of the first embodiment.

This die of the ninth embodiment is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of the foaming rates of 1-fold to 35-fold, although calculated values of surface uniformity were inferior to those of the first to the fourth embodiments, the surface uniformity evaluation result was determined as "○", and sheets having favorable surface uniformity were obtained.

In the ninth embodiment also, similarly to the sixth embodiment, temperature measurement was performed (points of black circles in the drawings). A temperature difference between the maximum temperature and the minimum temperature out of the measured temperatures of the eight points was 2.5°C.

Tenth Embodiment

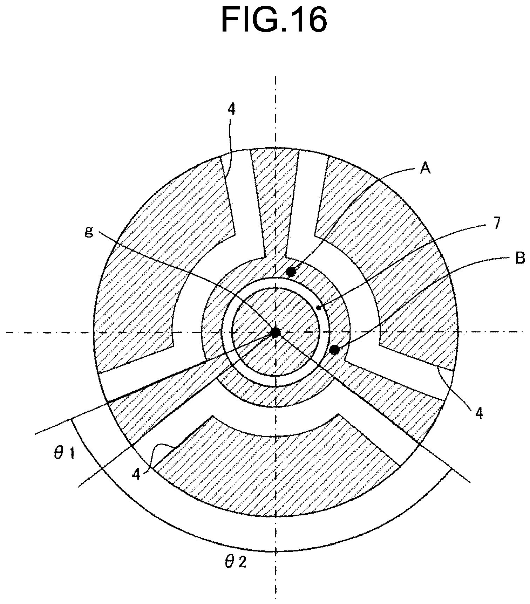

FIG. 16 is a schematic cross-section of the die according to the tenth embodiment.

As illustrated in FIG. 16, the die of the tenth embodiment has three temperature adjusting channels 4 arranged at positions shifted by 120° each in a rotation direction about the extrusion center axis g to have the same shapes on a cross-section perpendicular to the extrusion center axis g. The angle $\theta1$ is set to be equal to or smaller than 15°, and the angle $\theta2$ is set to be equal to or smaller than 120°. Furthermore, diameters of the respective temperature adjusting channels were adjusted appropriately so that the six temperature adjusting channels can be arranged at regular intervals in the rotation direction about the extrusion center axis g. Others except this point are the same as the die of the first embodiment.

This die of the tenth embodiment is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. For either one of the foams of the foaming rates of 1-fold to 35-fold, although calculated values of surface uniformity were inferior to those of the first to the fourth embodiments, the surface uniformity evaluation result was determined as "○", and sheets having favorable surface uniformity were obtained.

Moreover, temperature at points A (near an entrance of the relay channel 42) and B (near an exit of the relay channel 42) indicated in FIG. 16 at a position upstream from the extrusion outlet 9 of the die 1 in the extrusion direction by 3 mm in the direction of the extrusion center axis was measured by a non-contact thermometer. A temperature difference between the points A and B indicated in FIG. 16 was 3.0°C.


First Comparative Example

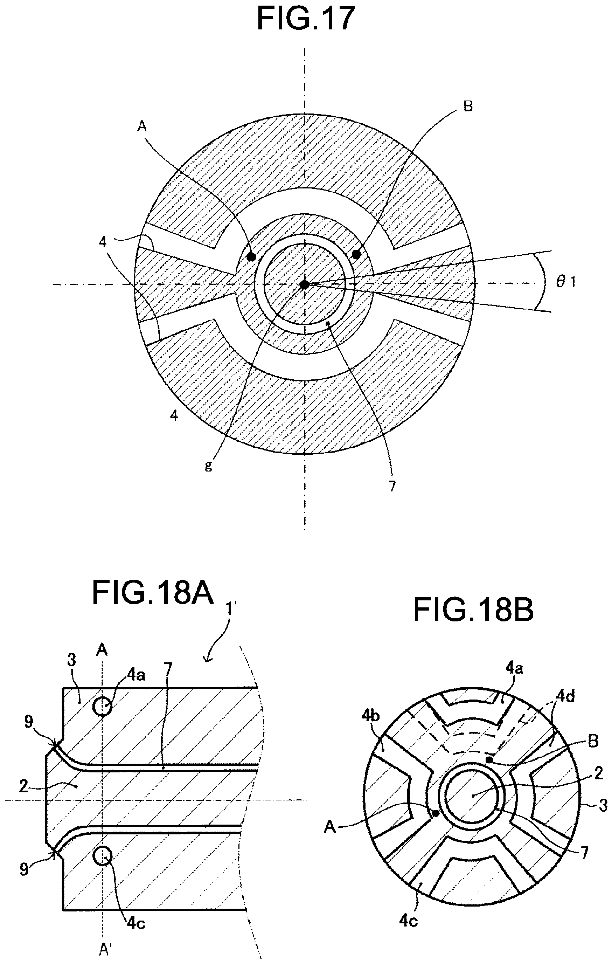

FIG. 17 is a schematic cross-section of the die according to the first comparative example.

As illustrated in FIG. 17, the die of the first comparative example has two temperature adjusting channels arranged at positions shifted by 180° each in a rotation direction about the extrusion center axis g to have the same shapes on a cross-section perpendicular to the extrusion center axis g. The angle θ1 was set to be equal to or smaller than 15°, and the angle θ2 exceeded 120°. Furthermore, diameters of the respective temperature adjusting channels were adjusted appropriately. Others except this point are the same as the die of the first embodiment.

This die of the first comparative example was attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. As a result, a sheet, surface uniformity evaluation of which was "×" was included, and a uniformity failure occurred.

Moreover, temperature at points A (near an entrance of the relay channel 42) and B (near an exit of the relay channel 42) indicated in FIG. 17 at a position upstream from the extrusion outlet 9 of the die 1 in the extrusion direction by 3 mm in the direction of the extrusion center axis was measured by a non-contact thermometer. A temperature difference between the points A and B indicated in FIG. 17 was 3.2°C.

In this first comparative example, the number of the temperature adjusting channels is two. Accordingly, because the respective temperature adjusting channels were configured such that the angle θ1 between adjacent temperature adjusting channels was equal to or smaller than 15°, an entire length of the temperature adjusting channel became long, and θ2 exceeded 120°. As a result, a temperature difference between temperature of the temperature adjusting medium at the upstream end portion in the flowing direction of the temperature adjusting medium of the relay channel 42 and temperature of the temperature adjusting medium at the downstream end portion in the flowing direction of the temperature adjusting medium of the relay channel 42 becomes large. As a result, a temperature difference between the point A (near the entrance of the relay channel 42) and the point B (near the exit of the relay channel 42) indicated in FIG. 17 exceeds 3. 0°C, and a difference between a heat exchange rate of the temperature adjusting medium with the die 1 near the downstream side in the flowing direction of the temperature adjusting medium of the relay channel 42 and a heat exchange rate of the temperature adjusting medium with the die 1 near the downstream side in the flowing direction of the temperature adjusting medium of the relay channel 42 becomes large. It is thought that as a result, the cooling performance in the relay channel 42 cannot be made uniform. It is thought that this made the viscosity of the plastic composition vary in the circumferential direction near the extrusion outlet 9, and the plastic composition could not be extruded out from the extrusion outlet 9 at a uniform extrusion speed, to cause a uniformity failure.


Second Comparative Example

FIGS. 18A and 18B are schematic configuration diagrams of the die according to the comparative example.

As illustrated in FIGS. 18A and 18B, the die of the second comparative example have four temperature adjusting channels arranged at positions shifted by 90° in the rotation direction about the extrusion center axis g. In the second comparative example, as illustrated in FIG. 8, out of the four temperature adjusting channels one temperature adjusting channel 4a is formed to be a significantly different channel from the other three temperature adjusting channels. Moreover, diameters of the respective temperature adjusting channels were adjusted appropriately so that the four temperature adjusting channels can be arranged at regular intervals in the rotation direction about the extrusion center axis g. Others except this point are the same as the die of the first embodiment.

This die of the second comparative example is attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. As a result, a sheet, surface uniformity evaluation of which was "×" was included, and a uniformity failure occurred.

Moreover, temperature at points A and B indicated in FIG. 18B at a position upstream from the extrusion outlet 9 of the die 1 in the extrusion direction by 3 mm in the direction of the extrusion center axis was measured by a non-contact thermometer. A temperature difference between the points A and B indicated in FIGS. 18A and 18B was 4.0°C.

In the second comparative example, the temperature adjusting channel 4a has a shape significantly different from the other three, and differs significantly from point symmetrical shape about the extrusion center axis g. As described, because the temperature adjusting channel 4a is different in shape from the other three, the cooling state of the die 1 by the temperature adjusting channel 4a and the cooling state of the die 1 by the other temperature adjusting channels 4b to 4d differ from each other. As a result, temperature of the die near the temperature adjusting channel 4a and temperature of the die near the temperature adjusting channels 4b to 4d differ from each other, temperatures of the die 1 in the circumferential direction varies from each other. It is thought that as a result, the viscosity of the plastic composition near the extrusion outlet 9 varied in the circumferential direction, and the plastic composition could not be extruded out from the extrusion outlet 9 at a uniform extrusion speed, to cause a uniformity failure.

When a difference in shape of the respective temperature adjusting channels is within an error range, and the respective temperature adjusting channels are substantially point symmetrical about the extrusion center axis g, temperature of the die 1 in the circumferential direction can be made uniform, and the plastic composition can be extruded out from the extrusion outlet 9 at a uniform extrusion speed.

Third Comparative Example

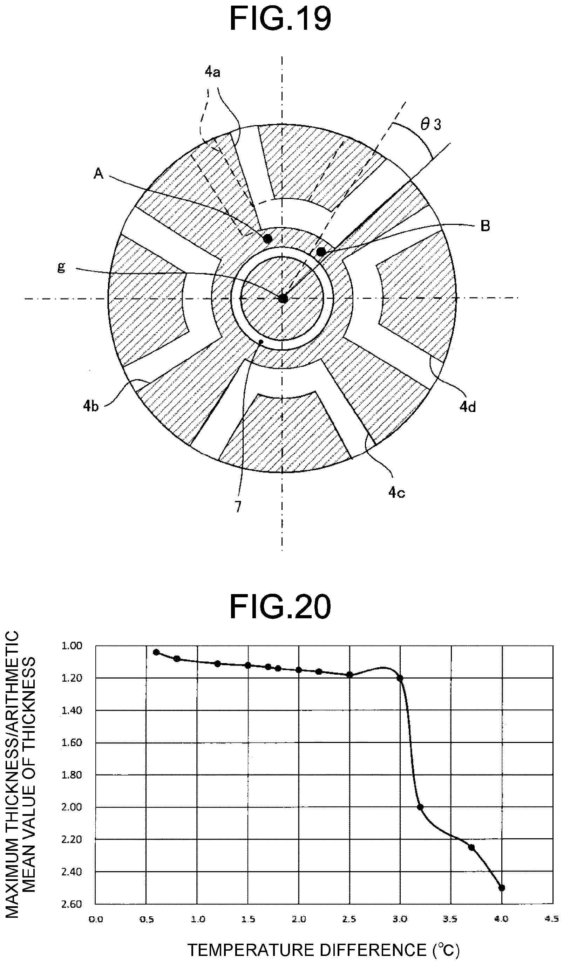

FIG. 19 is a schematic cross-section of a die according to the third comparative example.

As illustrated in FIG. 19, in the die of the third comparative example, out of four temperature adjusting channels, the temperature adjusting channel 4a at a position of 12 o'clock in the drawing (position in an upper part of the drawing) is arranged at a position shifted by 20% ($\theta3=18°$) in a clockwise direction in the drawing relative to the temperature adjusting channel 4a (broken line in the drawing) of the first embodiment. Moreover, in the die of the third comparative example, the angle $\theta1$ and the angle $\theta2$ were appropriately adjusted such that even when the temperature adjusting channel 4a (broken line in the drawing) at the position of 12 o'clock in the drawing (position in the upper part in the drawing) is arranged at a position shifted by 20% in a clockwise direction in the drawing, the temperature adjusting channel 4d adjacent in the clockwise direction in the drawing is not interfered. Others except this point are the same as the die of the first embodiment.

This die of the third comparative example was attached to the manufacturing apparatus illustrated in FIG. 1, and similarly to the first embodiment, temperature near the extrusion outlet 9 of the die was adjusted by supplying oil of 110°C to the respective temperature adjusting channels, and foams of the foaming rate of 1-fold to 35-fold were obtained while changing the supply amount of the compressible fluid. As a result, a sheet, surface uniformity evaluation of which was "×" was included, and a uniformity failure occurred.

Moreover, temperature at points A (near an entrance of the relay channel 42) and B (near an exit of the relay channel 42) indicated in FIG. 19 at a position upstream from the extrusion outlet 9 of the die 1 in the extrusion direction by 3 mm in the direction of the extrusion center axis was measured by a non-contact thermometer. A temperature difference between the points A and B indicated in FIG. 19 was 3.7.

In this third comparative example, it is thought that because a gap between the temperature adjusting channel 4a at a position of 12 o'clock in the drawing (position in an upper part of the drawing) and the temperature adjusting channel 4b at a position of 9 o'clock in the drawing (position on the left side of the drawing) was too large, a portion therebetween was not sufficiently cooled. As a result, temperature of the die between the temperature adjusting channel 4a and the temperature adjusting channel 4b differs from temperature of the die in other parts differ from each other, and temperature of the die varies in the circumferential direction. It is thought that because of this, the viscosity of the plastic composition varied in the circumferential direction near the extrusion outlet 9, and the plastic composition could not be extruded out from the extrusion outlet 9 at a uniform extrusion speed, to cause a uniformity failure.

In contrast, in the first to the tenth embodiments, three or more temperature adjusting channels in the same shape are arranged at positions in a range of ±10% from (360°/number of temperature adjusting channels=N)° in the rotation direction about the extrusion center axis g within an error range on a cross-section perpendicular to the extrusion center axis g. As a result, the portion near the extrusion outlet 9 of the die 1 can be uniformed cooled with the three or more temperature adjusting channels, and a temperature difference in the circumferential direction at the position upstream from the extrusion outlet 9 of the die 1 in the extrusion direction by 3 mm in the direction of the extrusion center axis can be made equal to or smaller than 3.0°C. Thus, the viscosity of the plastic composition can be made substantially uniform in the circumferential direction, and the plastic composition can be extruded out from the extrusion outlet 9 at a uniform extrusion speed. It is thought that as a result, in either of the foams of the foaming rates of 1-fold to 35-fold, both the maximum thickness/the arithmetic mean value of thickness, and the minimum thickness/the arithmetic mean value of thickness could be brought to an approximate value to 1.0, and sheets of favorable surface uniformity could be obtained.

In the first to the fourth embodiments, the maximum thickness/the arithmetic mean value of thickness, the minimum thickness/the arithmetic mean value of thickness are close to a value of 1.0 compared to the fifth embodiment, and sheets having more favorable surface uniformity than that of the fifth embodiment could be obtained. While in the fifth embodiment, the temperature adjusting medium in the relay channel is made flow in the extrusion axis direction, in the first to the fourth embodiments, the temperature adjusting medium in the relay channel is made flow in the circumferential direction, and the channel center lines of the respective temperature adjusting channels are present on a plane of arbitrary unit perpendicular to the extrusion center axis. It is thought that as a result, more precise temperature control than the fifth embodiment was possible, and because temperature near the extrusion outlet 9 of the die 1 could be made more uniform in the circumferential direction than the fifth embodiment, sheets having higher uniformity than the fifth embodiment could be obtained.

As can be seen from Table 1, the maximum thickness/the arithmetic mean value of thickness and the minimum thickness/the arithmetic mean value of thickness of the first to the fourth embodiments were close to 1.0 compared to the sixth, the eight, and the ninth embodiments, and sheets having more favorable surface uniformity than the sixth, the eight, and the ninth embodiments could be obtained. It is thought that this is because any of the temperature adjusting channels is not deviated in the circumferential direction in the first to the fourth embodiment, and the temperature of the die 1 in the circumferential direction could therefore be made more uniform, and the plastic composition could be extruded out from the extrusion outlet 9 at a uniform extrusion speed. As it is found from the sixth, the eight, and the ninth embodiments, when a position deviation in the circumferential direction of the temperature adjusting channels is within 10%, sheets having favorable surface uniformity can be obtained.

Moreover, as can be seen from the maximum thickness/the arithmetic mean value of thickness and the minimum thickness/the arithmetic mean value of thickness of the first and the seventh embodiments shown in Table 1, it is found that the surface uniformity is higher (closer to a value of 1.0) in the first embodiment than in the seventh embodiment. It is thought that this is because the relay channel 42 of the temperature adjusting channel 4 is formed in an arc shape on a cross-section perpendicular to the extrusion center axis g to be arranged along the ring-shaped plastic flow channel 7 in the first embodiment, and temperature of the plastic composition in the plastic flow channel 7 could therefore be made more uniform in the circumferential direction than in the seventh embodiment, and the surface uniformity could be increased.

Furthermore, as can be seen from the maximum thickness/the arithmetic mean value of thickness and the minimum thickness/the arithmetic mean value of thickness of the first to the fourth, and the tenth embodiments shown in Table 1, by increasing the number of the temperature adjusting channels, the value can be brought closer to 1.0, and the surface uniformity can be improved.

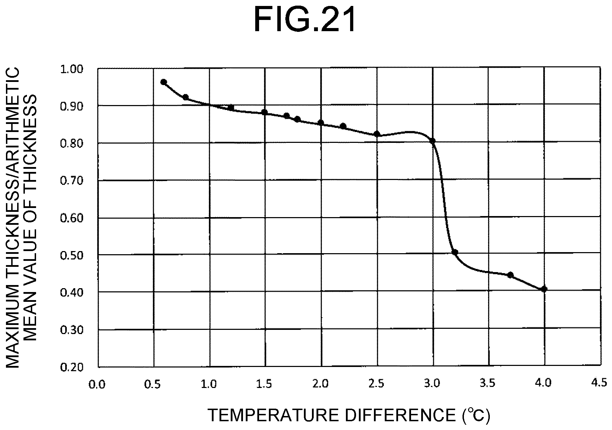

FIG. 20 is a graph showing a relation between a maximum thickness/an arithmetic mean value of thickness and a temperature difference in the circumferential direction at a position upstream from the extrusion outlet 9 of the die 1 in the extrusion direction by 3 mm in the direction of the extrusion center axis. FIG. 21 is a graph showing a relation between a minimum thickness/an arithmetic mean value of thickness and a temperature difference in the circumferential direction at the position upstream from the extrusion outlet 9 of the die 1 in the extrusion direction by 3 mm in the direction of the extrusion center axis.

As can be seen from FIG. 20 and FIG. 21, when the temperature difference in the circumferential direction at the position upstream from the extrusion outlet 9 of the die 1 in the extrusion direction by 3 mm in the direction of the extrusion center axis exceeds 3.0°C, the maximum thickness/the arithmetic mean value of thickness and the minimum thickness/the arithmetic mean value of thickness suddenly become worse, and the maximum thickness/the arithmetic mean value of thickness and the minimum thickness/the arithmetic mean value of thickness become values significantly different from 1.0. From this fact, by controlling the temperature difference in the circumferential direction at the position upstream from the extrusion outlet 9 of the die 1 in the extrusion direction by 3 mm in the direction of the extrusion center axis to be equal to or smaller than 3.0°C, sheets having high surface uniformity can be obtained. Furthermore, at least as the configuration of the first to the tenth embodiments, by forming a die in which three or more temperature adjusting channels in the same shape are arranged at positions in a $\pm 10°$ range of (360°/number of temperature adjusting channels=N)° in the rotation direction about the extrusion center axis g within an error range on a cross-section perpendicular to the extrusion center axis g, as shown in Table 1, a temperature difference in the circumferential direction at a position upstream from the extrusion outlet 9 of the die 1 in the extrusion direction by 3 mm in the direction of the extrusion center axis can be controlled to be equal to or smaller than 3.0°C. Thus, the maximum thickness/the arithmetic mean value of thickness and the minimum thickness/the arithmetic mean value of thickness can be brought to a value close to 1.0, and sheets having high surface uniformity can be obtained.

As the third and the fourth embodiments in Table 1 indicate, it is more preferable to make the temperature difference in the circumferential direction at the position upstream from the extrusion outlet 9 of the die 1 in the extrusion direction by 3 mm in the direction of the extrusion center axis equal to or smaller than 1.0°C. By controlling the temperature difference to be equal to or smaller than 1.0°C, the maximum thickness/the arithmetic mean value of thickness and the minimum thickness/the arithmetic mean value of thickness can be brought to a value closer to 1.0, and sheets having higher surface uniformity can be obtained.

In the above description, the temperature adjusting channel is formed in the outer die on the outside of the plastic flow channel 7, but the temperature adjusting channel may be formed in the inner die on the inside of the plastic flow channel 7. Moreover, the temperature adjusting channel can be formed on both outside and inside the plastic flow channel 7. By forming the temperature adjusting channel on both outside and inside the plastic flow channel 7, more precise temperature control can be performed. In contrast, by forming the temperature adjusting channel in the outer die on the outside of the plastic flow channel 7, three or more temperature adjusting channels can be formed easily compared to a case of forming them in the inner die.

Moreover, in the present embodiment, the respective temperature adjusting channels 4a, 4b, 4c, and 4d are arranged at the same positions in the direction of the extrusion center axis g such that the channel center lines h of the respective temperature adjusting channels 4a, 4b, 4c, and 4d are present in a plane of an arbitrary unit perpendicular to the extrusion center axis g. However, there is no problem even if it is misaligned by about an amount as much as the radius of the channel with respect to the extrusion center axis g. If the misalignment is this amount, a similar effect as the case in which the channel center lines h of the respective temperature adjusting channels 4a, 4b, 4c, and 4d are present in a plane of an arbitrary unit perpendicular to the extrusion center axis g. That is, the effects that temperature of the die 1 in the circumferential direction can be precisely controlled, and variation in temperature in the circumferential direction of the die 1 can be reduced are obtained.

What has been explained above is one example, and effects specific to each of following aspects is exerted.

Aspect 1

In an extrusion molding die such as the die 1 that includes the extrusion outlet 9 from which a plastic composition including at least one kind of plastic is extruded, the plastic flow channel 7 that lets the supplied plastic composition flow toward the extrusion outlet 9, and the temperature adjusting channels 4a to 4d through which the temperature adjusting medium is made flow, the respective temperature adjusting channels are arranged at a position in ±10% of (360°/N) in a rotation direction about the extrusion center axis relative to the adjacent temperature adjusting channel, where the number of the temperature adjusting channels is N.

According to this configuration, as explained in the evaluation test above, a temperature difference in the circumferential direction at a position upstream from an extrusion outlet of the extrusion molding die in the extrusion direction by 3 mm in the direction of extrusion center axis can be adjusted to be 3.0°C or smaller by the temperature adjusting channels, and sheets with high surface uniformity can be obtained.

Aspect 2

In Aspect 1, shapes of the temperature adjusting channels when the temperature adjusting channels 4a to 4d are vertically projected in the direction of the extrusion center axis are point symmetric.

According to this configuration, as explained in the evaluation test above, the extrusion molding die can be controlled to have temperature substantially uniform in the circumferential direction. The shape of the respective temperature adjusting channels are regarded as point symmetric within a predetermined error range.

Aspect 3

In Aspect 1 or 2, plural temperature adjusting channels are arranged at regular intervals in the rotation direction about the extrusion center axis g.

According to this configuration, as explained in the embodiments, the extrusion molding die can be controlled to have temperature substantially uniform in the circumferential direction by the temperature adjusting channels.

Aspect 4

In any one of Aspects 1 to 3, the channel center lines h of the respective temperature adjusting channels 4a to 4d are present in a plane of an arbitrary unit perpendicular to the extrusion center axis.

According to this configuration, as explained in the embodiments, temperature of the same positions in the direction of the extrusion center axis can be adjusted by the respective temperature adjusting channels 4a, 4b, 4c, and 4d. Thus, temperature of the extrusion molding die such as the die 1 in the circumferential direction can be precisely controlled compared to the case in which the respective temperature adjusting channels are arranged at positions different from one another in the direction of the extrusion center axis, and variation in temperature in the circumferential direction of the extrusion molding die can be reduced.

Aspect 5

In any one of Aspects 1 to 4, the respective temperature adjusting channels 4a to 4d have a channel portion such as the relay channel 42 through which the temperature adjusting medium is made flow while keeping a predetermined distance from the plastic flow channel 7, when vertically projected in the direction of the extrusion center axis.

According to this configuration, temperature of the plastic composition in the plastic flow channel 7 can be adjusted to be uniform in the circumferential direction by the channel portion such as the relay channel 42. Thus, the temperature of the plastic composition in the plastic flow channel 7 can be made uniform in the circumferential direction, and it is possible to suppress viscosity variation of the plastic composition in the plastic flow channel 7 in the circumferential direction. Therefore, the plastic composition can be extruded out from the extrusion outlet 9 of the die 1 uniformly, and a plastic sheet having a uniform thickness can be formed.

Aspect 6

In Aspect 5, the angle θ2 formed between a line segment connecting a downstream end portion of the channel portion in the flowing direction of the temperature adjusting medium, such as the relay channel 42, and the extrusion center axis g, and a line segment connecting an upstream end portion of the channel portion in the flowing direction of the temperature adjusting medium and the extrusion center axis is equal to or smaller than 120°, when vertically projected in the direction of extrusion center axis.

According to this configuration, as explained in the embodiments, a difference between temperature of the temperature adjusting medium at the upstream end portion in the flowing direction of the channel portion, such as the relay channel 42, and temperature of the temperature adjusting medium at the downstream end portion in the flowing direction can be made small compared to the case in which the above angle θ2 exceeds 120°. Thus, a difference between a heat exchange rate of the temperature adjusting medium near the upstream side in the flowing direction of the temperature adjusting medium of the channel portion with the mold and a heat exchange rate near the downstream side in the flowing direction of the temperature adjusting medium with the mold can be reduced. This enables to make the temperature adjusting performance in the channel portion uniform, and temperature can be controlled uniformly in the circumferential direction.

Aspect 7

In any of Aspects 1 to 6, as for two temperature adjusting channels adjacent to each other, an angle formed between a line segment connecting a position closest to the other temperature adjusting channel in one temperature adjusting channel and the extrusion center axis g and a line segment connecting a position closest to one temperature adjusting channel in the other temperature adjusting channel and the extrusion center axis is 15° or smaller, when vertically projected in the direction of the extrusion center axis.

According to this configuration, as explained in the embodiments, increase of difference in temperature between a portion between the temperature adjusting channels and other portions in the extrusion molding die, such as the die 1, can be suppressed, and the extrusion molding die can be controlled have substantially uniform temperature in the circumferential direction.

Aspect 8

In any of Aspects 1 to 7, the outer die 3 having a through hole and the inner die 2 arranged inside the through hole are included, and the inner periphery of the through hold of the outer die 3 and the outer periphery of the inner die 2 form the plastic flow channel 7 having the ring-shaped cross-section perpendicular to the extrusion center axis g.

According to this configuration, the ring-shaped plastic flow channel 7 can be formed easily .

Aspect 9

In Aspect 8, the outer die 3 includes the first outer die 3a in which the plural temperature adjusting channels 4a to 4d are formed, and the second outer die 3b that is arranged upstream of the first outer die 3a in the extrusion direction of the plastic composition.

According to this configuration, as explained in the embodiments, by replacing the first outer die 3a, the number and the shape of the temperature adjusting channels, the shape of the plastic flow channel 7 near the extrusion outlet 9, and the like can be changed. Thus, manufacturing cost can be reduced compared to a case in which the number and the shape of the temperature adjusting channel, the shape of the plastic flow channel near the extrusion outlet, and the like are changed by replacing the entire outer die 3.

Aspect 10

In Aspect 8 or 9, the outer die 3 includes the first member 3a1 that forms the plastic flow channel 7, and the second member 3a2 that includes the temperature adjusting channel and that externally contacts the first member 3a1

According to this configuration, as explained by using FIGS. 6A and 6B, by replacing the second member 3a2 for the first member 3a1, the number of the temperature adjusting channel or the like can be changed. Moreover, because the second member 3a2 does not form the plastic flow channel 7, the inner diameter of the through hole it is not necessary to be formed precisely. Therefore, the number of the temperature adjusting channel and the like can be changed at low cost compared to a case in which the number of the temperature adjusting channel or the like is changed by replacing the first outer die 3a for the second outer die 3b.

Aspect 11

In the plastic manufacturing apparatus 20 that includes a mold, such as the die 1, a plastic composition including at least one kind of plastic is supplied to the mold, and the plastic composition is extruded out from the extrusion outlet 9 of the mold to manufacture a foam plastic, the extrusion molding die of any one of Aspects 1 to 10 is used as the mold.

According to this configuration, a foam plastic having uniform thickness can be manufactured.

Aspect 12

In Aspect 11, a temperature difference when temperature is measured at plural positions in the circumferential direction at the position upstream from the extrusion outlet 9 in the extrusion direction of the plastic composition by 3 mm is 3.0°C or smaller.

According to this configuration, as explained by using FIG. 20 and FIG. 21, a foam plastic having uniform thickness can be manufactured.

Aspect 13

In Aspect 11 or 12, a kneading unit, such as the kneading area c, in which a plastic composition is obtained by kneading at least one kind of plastic in the presence of a compressible fluid at temperature lower than the melting point of the plastic is included.

According to this configuration, as explained in the embodiments, the kneading efficiency increases, and the foaming speed in the mold, such as a die, can be made uniform in the plastic composition. Moreover, it is possible to suppress occurrence of deterioration, such as burn and stain, carbonization, oxidization, and decomposition in the apparatus.

Aspect 14

In any one of Aspects 11 to 13, an extrusion forming unit, such as the extruding area d, in which a foam plastic is formed by extruding the plastic composition from the mold, such as the die 1, at temperature lower than the melting point of the plastic, such as polylactic acid, in the presence of a compressible fluid is included.

According to this configuration, viscosity of the plastic composition can be increased compared to a case in which a foam plastic is formed by extruding the plastic composition from the mold, such as the die 1, at temperature higher than the melting point of the plastic. Thus, the foam plastic can be formed by extruding the plastic composition in a state of high viscosity, and a favorable foam plastic can be obtained without breaking foams.

Aspect 15

In any of Aspects 11 to 14, the plastic composition includes polylactic acid of 90 percent by mass or more.

According to this configuration, as explained in the embodiments, a manufacturing apparatus of a foam plastic having biodegradability can be provided.

Aspect 16

In a manufacturing method of a foam plastic to manufacture a foam plastic by extruding a plastic composition including at least one kind of plastic from the extrusion outlet 9 of a mold, such as the die 1, the extrusion molding die of any one of Aspects 1 to 10 is used as the mold.

According to this configuration, a foam plastic having uniform thickness can be manufactured.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

## Claims

1. An extrusion molding die comprising:

   an extrusion outlet configured to extrude a plastic composition including at least one kind of plastic;
   a plastic flow channel configured to allow the supplied plastic composition to flow toward the extrusion outlet; and
   a temperature adjusting channel configured to allow a temperature adjusting medium to flow, wherein
   the temperature adjusting channel includes three or more temperature adjusting channels arranged around the plastic flow channel, and
   each of the temperature adjusting channels is arranged at a position in ±10% of (360°/N) in a rotation direction about an extrusion center axis relative to an adjacent temperature adjusting channel, where a number of the temperature adjusting channels is N.

2. The extrusion molding die according to claim 1, wherein shapes of the temperature adjusting channels when the temperature adjusting channels are vertically projected in a direction of the extrusion center axis are point symmetric.

3. The extrusion molding die according to claim 1 or 2, wherein the temperature adjusting channels are arranged at regular intervals in the rotation direction about the extrusion center axis.

4. The extrusion molding die according to any one of claims 1 to 3, wherein a channel center line of each of the temperature adjusting channels is present in a plane of an arbitrary unit perpendicular to the extrusion center axis.

5. The extrusion molding die according to any one of claims 1 to 4, wherein each of the temperature adjusting channels has a channel portion configured to allow the temperature adjusting medium to flow while keeping a predetermined distance from the plastic flow channel, when vertically projected in the direction of the extrusion center axis.

6. The extrusion molding die according to claim 5, wherein an angle formed between a line segment connecting a downstream end portion of the channel portion in a flowing direction of the temperature adjusting medium and the extrusion center axis, and a line segment connecting an upstream end portion of the channel portion in the flowing direction of the temperature adjusting medium and the extrusion center axis is equal to or smaller than 120°, when vertically projected in the direction of the extrusion center axis.

7. The extrusion molding die according to any one of claims 1 to 6, wherein as for a first temperature adjusting channel and a second temperature adjusting channel adjacent to each other, an angle formed between a line segment connecting a position closest to the second temperature adjusting channel in the first temperature adjusting channel and the extrusion center axis and a line segment connecting a position closest to the first temperature adjusting channel in the second temperature adjusting channel and the extrusion center axis is equal to or smaller than 15°, when vertically projected in the direction of the extrusion center axis.

8. The extrusion molding die according to any one of claims 1 to 7, comprising:

   an outer die having a through hole; and
   an inner die arranged in the through hole, wherein
   an inner periphery of the through hole of the outer die and an outer periphery of the inner die form the plastic flow channel having a ring-shaped cross-section perpendicular to the extrusion center axis.

9. The extrusion molding die according to claim 8, wherein the outer die includes a first outer die in which the temperature adjusting channels are formed, and a second outer die arranged upstream of the first outer die in an extrusion direction of the plastic composition.

10. The extrusion molding die according to claim 8 or 9, wherein the outer die includes a first member forming the plastic flow channel, and a second member including the temperature adjusting channels and externally contacting the first member.

11. A plastic manufacturing apparatus comprising a mold, the plastic manufacturing apparatus being configured to supply a plastic composition including at least one kind of plastic to the mold, and extrude the plastic composition from an extrusion outlet of the mold, to manufacture a foam plastic, wherein
the extrusion molding die according to any one of claims 1 to 10 is used as the mold.

12. The plastic manufacturing apparatus according to claim 11, comprising a kneading unit configured to knead at least one kind of plastic in presence of a compressible fluid at a temperature lower than the melting point of the at least one kind of plastic, to obtain a plastic composition.

13. The plastic manufacturing apparatus according to claim 11 or 12, comprising an extrusion forming unit configured to extrude the plastic composition from the mold at a temperature lower than the melting point of the at least one kind of plastic in presence of a compressible fluid, to form a foam plastic.

14. The plastic manufacturing apparatus according to any one of claims 11 to 13, wherein the plastic composition includes polylactic acid of 90 percent by mass or more.

15. A plastic manufacturing method of extruding a plastic composition including at least one kind of plastic from an extrusion outlet of a mold, to manufacture a foam plastic, wherein
the extrusion molding die according to any one of claims 1 to 10 is used as the mold.

EP 4 070 933 A1

# FIG.1

# FIG.2

# FIG.3

# FIG.4

# FIG.5D

5

43a    41a    } 3b
                } 3
                } 3a

# FIG.5B

41a — ○

5 —

43a — ○

3b  3a
  └─┬─┘
    3

# FIG.5A

9

3a

2a

# FIG.5C

○ ← 43a

— 5

○ ← 41a

3a  3b
  └─┬─┘
    3

# FIG.5E

3 { 3a
    3b

○        ○

41a    43a

5

# FIG.5F

7

3b

2b

# FIG.6A

# FIG.6B

# FIG.7

# FIG.8

# FIG.9

# FIG.10

# FIG.11A

# FIG.11B

# FIG.12

TEMPERATURE
MEASUREMENT
POINT

# FIG.13

4a
41 42 43

4b

g

7

4d

4c

TEMPERATURE
MEASUREMENT
POINT

# FIG.14

TEMPERATURE
MEASUREMENT
POINT

# FIG.15

θ3

4a

g

4d

TEMPERATURE
MEASUREMENT
POINT

4b

4c

7

# FIG.16

# FIG.17

# FIG.18A

# FIG.18B

# FIG.19

# FIG.20

TEMPERATURE DIFFERENCE (°C)

# FIG.21

Europäisches Patentamt
European Patent Office
Office européen des brevets

# EUROPEAN SEARCH REPORT

Application Number

EP 22 16 4987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 857 665 A (KENNEDY F) 31 December 1974 (1974-12-31) * claims 1-11 * * figures 1-3 * | 1-7, 11-13,15 | INV. B29C48/86 B29C44/20 B29C48/32 |
| X | NL 6 515 266 A (ZIMMERMANN & JANSEN GMBH) 26 May 1966 (1966-05-26) * claims 1-3 * * figures 1-2 * | 1-6,8,9, 11,12,14 | |
| X | JP S51 32660 B1 (N.N.) 14 September 1976 (1976-09-14) * figures 1-7 * | 1-7, 11-13,15 | |
| X | US 5 567 369 A (BECKWITH ROBERT W [US]) 22 October 1996 (1996-10-22) * abstract * * claims 1-10 * * figures 1-6 * | 1-5,8-11 | |
| X | WO 2008/102874 A1 (SEKISUI PLASTICS [JP]; ASANO YASUMASA [JP]; YAMASHITA MASATOSHI [JP]) 28 August 2008 (2008-08-28) * figures 1-6 * | 1,8, 11-13,15 | TECHNICAL FIELDS SEARCHED (IPC) B29C |
| A | US 5 763 498 A (KNAUS DENNIS A [US]) 9 June 1998 (1998-06-09) * figure 1, cf. 26 * | 11,13,15 | |

The present search report has been drawn up for all claims

| Place of search | Date of completion of the search | Examiner |
|---|---|---|
| Munich | 24 August 2022 | Ngwa, Walters |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 4987

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2022

| Patent document cited in search report | | Publication date | Patent family member(s) | | Publication date |
|---|---|---|---|---|---|
| US 3857665 | A | 31-12-1974 | CA | 1028808 A | 04-04-1978 |
| | | | DE | 2417588 A1 | 07-11-1974 |
| | | | FR | 2225272 A1 | 08-11-1974 |
| | | | GB | 1465623 A | 23-02-1977 |
| | | | JP | S5052172 A | 09-05-1975 |
| | | | NL | 7404835 A | 15-10-1974 |
| | | | US | 3857665 A | 31-12-1974 |
| NL 6515266 | A | 26-05-1966 | LU | 49909 A1 | 24-01-1966 |
| | | | NL | 6515266 A | 26-05-1966 |
| JP S5132660 | B1 | 14-09-1976 | NONE | | |
| US 5567369 | A | 22-10-1996 | US | 5462423 A | 31-10-1995 |
| | | | US | 5567369 A | 22-10-1996 |
| WO 2008102874 | A1 | 28-08-2008 | JP | 4799664 B2 | 26-10-2011 |
| | | | JP | WO2008102874 A1 | 27-05-2010 |
| | | | TW | 200916294 A | 16-04-2009 |
| | | | WO | 2008102874 A1 | 28-08-2008 |
| US 5763498 | A | 09-06-1998 | AT | 311412 T | 15-12-2005 |
| | | | AU | 694571 B2 | 23-07-1998 |
| | | | BR | 9509120 A | 28-10-1997 |
| | | | CA | 2201145 A1 | 11-04-1996 |
| | | | CN | 1160411 A | 24-09-1997 |
| | | | CN | 1298790 A | 13-06-2001 |
| | | | DE | 69534653 T2 | 14-06-2006 |
| | | | EP | 0783543 A1 | 16-07-1997 |
| | | | FI | 971333 A | 30-05-1997 |
| | | | JP | 3803880 B2 | 02-08-2006 |
| | | | JP | H10506935 A | 07-07-1998 |
| | | | KR | 970706342 A | 03-11-1997 |
| | | | MY | 117755 A | 30-08-2004 |
| | | | PL | 319410 A1 | 04-08-1997 |
| | | | RU | 2160749 C2 | 20-12-2000 |
| | | | US | 5605937 A | 25-02-1997 |
| | | | US | 5763498 A | 09-06-1998 |
| | | | WO | 9610600 A1 | 11-04-1996 |
| | | | ZA | 958267 B | 24-04-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8034047 A